(19) **Europäisches Patentamt / European Patent Office / Office européen des brevets**

(11) **EP 4 745 274 A1**

(12) **EUROPEAN PATENT APPLICATION**
published in accordance with Art. 153(4) EPC

(43) Date of publication:
**20.05.2026 Bulletin 2026/21**

(21) Application number: **24842809.6**

(22) Date of filing: **15.05.2024**

(51) International Patent Classification (IPC):
$C25B\ 15/00\ ^{(2006.01)}$   $C25B\ 1/04\ ^{(2021.01)}$
$C25B\ 9/00\ ^{(2021.01)}$   $C25B\ 15/02\ ^{(2021.01)}$
$C25B\ 15/023\ ^{(2021.01)}$

(52) Cooperative Patent Classification (CPC):
Y02E 60/36

(86) International application number:
**PCT/JP2024/017880**

(87) International publication number:
**WO 2025/018013 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 JP 2023116044**

(71) Applicant: **Hitachi, Ltd.**
**Tokyo 100-8280 (JP)**

(72) Inventors:
• **MIZUKAMI Takaaki**
  **Tokyo 100-8280 (JP)**
• **SUGIMASA Masatoshi**
  **Tokyo 100-8280 (JP)**
• **GUNJI Akira**
  **Tokyo 100-8280 (JP)**
• **FUJITA Shinji**
  **Tokyo 100-8280 (JP)**

(74) Representative: **Mewburn Ellis LLP**
**Aurora Building**
**Counterslip**
**Bristol BS1 6BX (GB)**

(54) **WATER ELECTROLYSIS SYSTEM AND METHOD FOR OPERATING WATER ELECTROLYSIS SYSTEM**

(57)    A water electrolysis system (100) includes water electrolysis stacks (23) each of which generates a hydrogen gas and an oxygen gas as generated gases from water, a water tank (11) which supplies water to each of water electrolysis stacks, a hydrogen gas tank (51) which stores a hydrogen gas generated in each of water electrolysis stacks, an oxygen gas tank (52) which stores an oxygen gas generated in each of water electrolysis stacks, and a system control unit (80) which controls an operation of each unit of a system. A system control unit, during a hydrogen production operation, perform voltage monitoring on each of water electrolysis stacks and, for a water electrolysis stack of which an electrolysis voltage is detected to have risen by voltage monitoring, perform a process of recovering an electrolysis voltage by temporarily changing an operating condition.

EP 4 745 274 A1

[FIG. 1]

## Description

### TECHNICAL FIELD

The present invention relates to a water electrolysis system and a method of operating a water electrolysis system.

### BACKGROUND ART

Hydrogen is a clean energy that does not emit carbon dioxide when combusted, unlike fossil fuels. Accordingly, hydrogen has attracted attention as one of the clean energies as measures against global warming, and technologies related to the production, transportation, and utilization of hydrogen have been actively developed. As an example of such technologies, a water electrolysis system disclosed in Patent Document 1 has been provided. In the water electrolysis system disclosed in Patent Literature 1, a large number of water electrolysis stacks that generate a hydrogen gas and an oxygen gas from water through electrolytic decomposition (electrolysis) of water are connected in series to achieve a high voltage.

### CITATION LIST

### Patent Literature

Patent Literature 1: WO2023/012945

### SUMMARY OF INVENTION

### Technical Problem

Here, in the water electrolysis system, the gases (the hydrogen gas and oxygen gas generated from water) may stagnate in the electrode cells incorporated in a water electrolysis stack due to a reason such as deterioration of the water electrolysis stack, which may in turn raise the electrolysis voltage and decrease the electrolysis efficiency (performance). The conventional water electrolysis system handles the decrease in the electrolysis efficiency (performance) of the water electrolysis stack by replacing the water electrolysis stack. The hydrogen production efficiency of such a conventional water electrolysis system will drop if a system shutdown time frequently occurs due to the replacement of a water electrolysis stack. Also, the conventional water electrolysis system increases the replacement cost for replacing a water electrolysis stack with decreased electrolysis efficiency (performance) with another water electrolysis stack and the disposal cost for disposing of a water electrolysis stack with decreased electrolysis efficiency (performance).

The present invention has been made to solve the above problems, and a main object thereof is to provide a water electrolysis system and a method of operating a water electrolysis system which perform a process of recovering the electrolysis efficiency (performance) of a water electrolysis stack if the electrolysis efficiency (performance) of the water electrolysis stack has decreased.

### Solution to Problem

To achieve the above object, the present invention provides a water electrolysis system including water electrolysis stacks each of which generates a hydrogen gas and an oxygen gas as generated gases from water, a water tank which supplies water to each of water electrolysis stacks, a hydrogen gas tank which stores a hydrogen gas generated in each of water electrolysis stacks, an oxygen gas tank which stores an oxygen gas generated in each of water electrolysis stacks, and a system control unit which controls an operation of each unit of a system, and the system control unit, during a hydrogen production operation, perform voltage monitoring on each of water electrolysis stacks and, for a water electrolysis stack of which an electrolysis voltage is detected to have risen by the voltage monitoring, perform a process of recovering the electrolysis voltage by temporarily changing an operating condition.

Other elements will be described later.

### Advantageous Effect of Invention

According to the present invention, it is possible to reduce the frequency of replacement of a water electrolysis stack whose electrolysis efficiency (performance) has decreased and improve the hydrogen production efficiency.

## BRIEF DESCRIPTION OF DRAWINGS

FIG. 1 is a configuration diagram of a water electrolysis system according to an embodiment.

FIG. 2 is an internal block diagram of a system control unit of the water electrolysis system according to the embodiment.

FIG. 3A is an explanatory diagram of the electrolysis voltages of water electrolysis stacks before a pressure adjustment.

FIG. 3B is an explanatory diagram of the electrolysis voltages of the water electrolysis stacks after a pressure adjustment.

FIG. 4 is a graph between the stack current value and cell voltage of each water electrolysis stack.

FIG. 5A is a flowchart (1) showing an operation in a first example in a case of performing an electrolysis voltage recovery process.

FIG. 5B is a flowchart (2) showing the operation in the first example in the case of performing an electrolysis voltage recovery process.

FIG. 6A is a flowchart (1) showing an operation in a second example in a case of performing an electrolysis voltage recovery process.

FIG. 6B is a flowchart (2) showing the operation in the second example in the case of performing an electrolysis voltage recovery process.

FIG. 7A is a flowchart (1) showing an operation in a third example in a case of performing an electrolysis voltage recovery process.

FIG. 7B is a flowchart (2) showing the operation in the third example in the case of performing an electrolysis voltage recovery process.

FIG. 8A is a flowchart (1) showing an operation in a fourth example in a case of performing an electrolysis voltage recovery process.

FIG. 8B is a flowchart (2) showing the operation in the fourth example in the case of performing an electrolysis voltage recovery process.

## DESCRIPTION OF EMBODIMENTS

An embodiment of the present invention (hereinafter referred to as "the present embodiment") will now be described below in detail with reference to the drawings. It should be noted that each drawing is merely schematically presented to such an extent that the present invention can be sufficiently understood. The present invention is therefore not limited only to the examples shown. Also, identical or similar constituent elements in drawings are denoted by the same reference sign, and overlapping description thereof is omitted.

<Configuration of Water Electrolysis System>

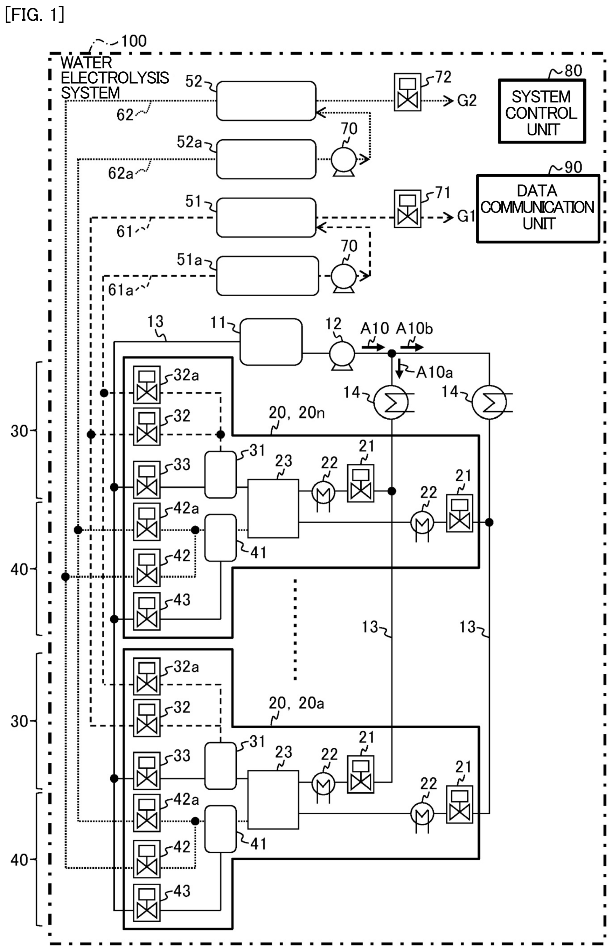

A configuration of a water electrolysis system 100 according to the present embodiment will be described below with reference to FIG. 1. FIG. 1 is a configuration diagram of the water electrolysis system 100 according to the present embodiment.

As shown in FIG. 1, the water electrolysis system 100 according to the present embodiment includes a water tank 11, multiple water electrolysis units 20, a hydrogen gas tank 51, an oxygen gas tank 52, a system control unit 80, and a data communication unit 90. Note that water electrolysis units 20a to 20n are shown as the multiple water electrolysis units 20 in FIG. 1.

The water electrolysis system 100 performs a hydrogen production operation by supplying electric power to each water electrolysis unit 20 from a power supply unit (not shown). Note that while the power supply unit and power supply lines are not depicted in the example shown in FIG. 1, the multiple water electrolysis units 20 are connected in series-parallel so that a general large DC power supply can be utilized. The numbers of series and parallel connections are not particularly limited.

The water tank 11 is a storage for water supplied to the water electrolysis units 20.

The water electrolysis units 20 are constituent element that generate a hydrogen gas and an oxygen gas through electrolysis of water.

The hydrogen gas tank 51 is a storage for the hydrogen gas generated by the water electrolysis units 20.

The oxygen gas tank 52 is a storage for the oxygen gas generated by the water electrolysis units 20.

The system control unit 80 is a constituent element that controls the operations of each unit of the system.

The data communication unit 90 is a constituent element that transmits and receives data to and from external entities.

Note that, in the present embodiment, the water electrolysis system 100 includes a low-pressure hydrogen gas tank 51a as a storage for the hydrogen gas generated by the water electrolysis units 20 in addition to the hydrogen gas tank 51. The low-pressure hydrogen gas tank 51a is at a lower pressure than the hydrogen gas tank 51.

Also, the water electrolysis system 100 includes a low-pressure oxygen gas tank 52a as a storage for the oxygen gas generated by the water electrolysis units 20 in addition to the oxygen gas tank 52. The low-pressure oxygen gas tank 52a is at a lower pressure than the oxygen gas tank 52.

The water tank 11 is connected to each water electrolysis unit 20 through a water pipe 13. The water electrolysis system 100 raises the pressure of the water inside the water tank 11 with a water delivery pump 12 to deliver it to each water electrolysis unit 20. The water pipe 13 is branched at intermediate portions. The water discharged from the water tank 11 advances in the direction of arrow A10, branches off at an intermediate portion, and advances in the direction of arrow A10a and the direction of arrow A10b.

The water advancing in the direction of arrow A10a gets cooled by a large cooler 14 and then taken into the hydrogen electrode side of the water electrolysis units 20. Also, the water advancing in the direction of arrow A10b gets cooled by a large cooler 14 and then taken into the oxygen electrode side of the water electrolysis units 20. Note that, in the example shown in FIG. 1, the water electrolysis system 100 is configured to supply water to both the hydrogen electrode side and the oxygen electrode side. However, the water electrolysis system 100 can be configured to supply water only to the oxygen electrode side, for example, if the water electrolysis stacks 23 have a proton-permeable solid polymer structure.

In the example shown in FIG. 1, the water electrolysis units 20 each incorporate two water flow rate adjustment valves 21 and two small coolers 22 on the hydrogen electrode side and the oxygen electrode side. Also, the water electrolysis units 20 each have a water electrolysis stack 23 that generates a hydrogen gas and an oxygen gas through electrolytic decomposition (electrolysis) of water.

Also, the water electrolysis units 20 each have a separation tank 31, pressure adjustment valves 32 and 32a, and a water discharge valve 33 as constituent elements on a hydrogen system 30 side for hydrogen. The separation tank 31 is a constituent element that separates water and hydrogen gas. The pressure adjustment valve 32 is a valve that, by adjusting its opening degree, adjusts the pressure of a hydrogen gas to be delivered to the hydrogen gas tank 51 from the water electrolysis unit 20 through a hydrogen gas pipe 61. The pressure adjustment valve 32a is a valve that, by adjusting its opening degree, adjusts the pressure of a low-pressure hydrogen gas to be delivered to the low-pressure hydrogen gas tank 51a from the water electrolysis unit 20 through a low-pressure hydrogen gas pipe 61a. The water discharge valve 33 is a valve that discharges the water separated by the separation tank 31 to the outside of the water electrolysis stack 23. The water discharge valve 33 has a function of adjusting a pressure inside the water electrolysis stack 23 to a predetermined pressure by adjusting its opening degree.

Also, the water electrolysis units 20 each have a separation tank 41, pressure adjustment valves 42 and 42a, and a water discharge valve 43 as constituent elements on an oxygen system 40 side for oxygen. The separation tank 41 is a constituent element that separates water and oxygen gas. The pressure adjustment valve 42 is a valve that, by adjusting its opening degree, adjusts the pressure of an oxygen gas to be delivered to the oxygen gas tank 52 from the water electrolysis unit 20 through an oxygen gas pipe 62. The pressure adjustment valve 42a is a valve that, by adjusting its opening degree, adjusts the pressure of a low-pressure oxygen gas to be delivered to the low-pressure oxygen gas tank 52a from the water electrolysis unit 20 through a low-pressure oxygen gas pipe 62a. The water discharge valve 43 is a valve that discharges the water separated by the separation tank 41 to the outside of the water electrolysis stack 23. The water discharge valve 43 has a function of adjusting a pressure inside the water electrolysis stack 23 to a predetermined pressure by adjusting its opening degree.

The water electrolysis system 100 raises the pressure of the water inside the water tank 11 with the water delivery pump 12 to deliver it to each water electrolysis unit 20 while cooling the water with the large coolers 14. Each water electrolysis unit 20 opens the water flow rate adjustment valves 21 to take in the water delivered from the water tank 11, cools the water with the small coolers 22, and stores it in the water electrolysis stack 23. The water electrolysis system 100 generates a hydrogen gas and an oxygen gas through electrolysis of the water by applying a predetermined voltage to the water electrolysis stack 23 of each water electrolysis unit 20.

Each water electrolysis unit 20 delivers the hydrogen gas generated by the water electrolysis stack 23 to the separation tank 31 from the water electrolysis stack 23 along with water that was not electrolyzed. Then, each water electrolysis unit 20 separates the medium delivered from the water electrolysis stack 23 into the water and the hydrogen gas with the separation tank 31. Each water electrolysis unit 20 opens the water discharge valve 33 at a predetermined opening degree to deliver the water to the water tank 11 through the water pipe 13. Also, each water electrolysis unit 20 opens the pressure adjustment valve 32 at a predetermined opening degree to deliver hydrogen to the hydrogen gas tank 51 through the hydrogen gas pipe 61. Also, each water electrolysis unit 20 opens the pressure adjustment valve 32a at a predetermined opening degree to deliver low-pressure hydrogen to the low-pressure hydrogen gas tank 51a through the low-pressure hydrogen gas pipe 61a.

Also, each water electrolysis unit 20 delivers the oxygen gas generated by the water electrolysis stack 23 to the separation tank 41 from the water electrolysis stack 23 along with water that was not electrolyzed. Then, each water electrolysis unit 20 separates the medium delivered from the water electrolysis stack 23 into the water and the oxygen gas with the separation tank 41. Each water electrolysis unit 20 opens the water discharge valve 43 at a predetermined opening degree to deliver the water to the water tank 11 through the water pipe 13. Also, each water electrolysis unit 20 opens the pressure adjustment valve 42 at a predetermined opening degree to deliver oxygen to the oxygen gas tank 52 through the oxygen gas pipe 62. Also, each water electrolysis unit 20 opens the pressure adjustment valve 42a at a predetermined opening degree to deliver low-pressure oxygen to the low-pressure oxygen gas tank 52a through the low-pressure oxygen gas pipe 62a.

The water electrolysis system 100 as above adjusts the pressure of the water separated by the separation tank 41 to a predetermined pressure with the water discharge valve 43, collects the water into the water tank 11, and re-supplies the water to the water electrolysis stack 23 with the water delivery pump 12.

Also, the water electrolysis system 100 as above adjusts the pressure of the hydrogen gas on the low-pressure side generated by each water electrolysis unit 20 to a predetermined pressure (low pressure) with the pressure adjustment valve 32a and collects the hydrogen gas into the low-pressure hydrogen gas tank 51a through the low-pressure hydrogen gas pipe 61a. Also, the water electrolysis system 100 adjusts the pressure of the hydrogen gas on the high-pressure side generated by each water electrolysis unit 20 to a predetermined pressure (high pressure) with the pressure adjustment valve 32 and collects the hydrogen gas into the hydrogen gas tank 51 through the hydrogen gas pipe 61.

Then, the water electrolysis system 100 raises the pressure of a hydrogen gas G1 stored in the low-pressure hydrogen gas tank 51a with a pressure raising pump 70 and delivers it to the hydrogen gas tank 51. The water electrolysis system 100 opens a pressure adjustment valve 71 to supply the hydrogen gas G1 stored in the hydrogen gas tank 51 to an external entity. At this time, the water electrolysis system 100 adjusts the opening degree of the pressure adjustment valve 71 to a predetermined opening degree to adjust the pressure of the hydrogen gas G1 to a predetermined pressure.

Also, the water electrolysis system 100 as above adjusts the pressure of the oxygen gas on the low-pressure side generated by each water electrolysis unit 20 to a predetermined pressure (low pressure) with the pressure adjustment valve 32a and collects the oxygen gas into the low-pressure oxygen gas tank 52a through the low-pressure oxygen gas pipe 62a. Also, the water electrolysis system 100 adjusts the pressure of the oxygen gas on the high-pressure side generated by each water electrolysis unit 20 to a predetermined pressure (high pressure) with the pressure adjustment valve 32 and collects the oxygen gas into the oxygen gas tank 52 through the oxygen gas pipe 62.

Then, the water electrolysis system 100 raises the pressure of an oxygen gas G2 stored in the low-pressure oxygen gas tank 52a with a pressure raising pump 70 to deliver it to the oxygen gas tank 52. The water electrolysis system 100 opens a pressure adjustment valve 72 to supply the oxygen gas G2 stored in the oxygen gas tank 52 to an external entity. At this time, the water electrolysis system 100 adjusts the opening degree of the pressure adjustment valve 72 to a predetermined opening degree to adjust the pressure of the oxygen gas G2 to a predetermined pressure.

Note that the low-pressure hydrogen gas tank 51a, the low-pressure oxygen gas tank 52a, the low-pressure hydrogen gas pipe 61a, the low-pressure oxygen gas pipe 62a, the pressure adjustment valve 32a, and the pressure adjustment valve 42a in particular are pieces of equipment unique to the water electrolysis system 100 according to the present embodiment. These constituent elements are provided from the following perspective.

For example, general water electrolysis stacks 23 vary in characteristics and also vary in electrolysis voltage due to deterioration. For this reason, applying the same current to the water electrolysis stacks 23 will result in differences in electrolysis efficiency.

To address this, the water electrolysis system 100 according to the present embodiment measures the electrolysis voltage of each individual water electrolysis stack 23 and adjusts the pressure adjustment valves 32a and the pressure adjustment valves 42a of any water electrolysis stacks 23 with high electrolysis voltages to lower their pressures. By doing so, the water electrolysis system 100 lowers the voltages of the water electrolysis stacks 23 with high electrolysis voltages, thereby reducing the voltage differences from the other water electrolysis stacks. The water electrolysis system 100 as above is capable of operating with the electrolysis efficiency of the water electrolysis stacks 23 enhanced.

Note that the pressures of the hydrogen gas and the oxygen gas discharged from the water electrolysis stacks 23 with lowered pressures (the water electrolysis stacks 23 with high electrolysis voltages) are lower than the pressures of the hydrogen gas and the oxygen gas discharged from the water electrolysis stacks 23 with low electrolysis voltages. Due to this, the hydrogen gases and the oxygen gases discharged from both water electrolysis stacks 23 cannot be caused to flow through the same gas pipe systems.

To address this, the water electrolysis system 100 according to the present embodiment is provided with the low-pressure hydrogen gas pipe 61a and the low-pressure oxygen gas pipe 62a as low-pressure gas lines. Moreover, through these low-pressure gas lines, the water electrolysis system 100 delivers and stores the hydrogen gas and the oxygen gas discharged from the water electrolysis stacks 23 with lowered pressures (the water electrolysis stacks 23 with high electrolysis voltages) to and in the low-pressure hydrogen gas tank 51a and the low-pressure oxygen gas tank 52a.

Thereafter, the water electrolysis system 100 raises the pressures of the hydrogen gas and the oxygen gas stored in the low-pressure hydrogen gas tank 51a and the low-pressure oxygen gas tank 52a with the pressure raising pumps 70 and delivers and stores them to and in the hydrogen gas tank 51 and the oxygen gas tank 52.

Also, the water electrolysis system 100 constantly monitors the opening degrees of the pressure adjustment valves 32, 32a, 42, and 42a so as to prevent backflow of the generated gases (hydrogen gas and oxygen gas) due to the pressure difference between the water electrolysis stacks 23 with lowered pressures (the water electrolysis stacks 23 with high electrolysis voltages) and the other water electrolysis stacks. Also, the water electrolysis system 100 controls the pressure adjustment valves 71 and 72 and the pressure raising pumps 70 depending on the situation to control the pressures in the hydrogen gas tank 51 and the oxygen gas tank 52.

<Configuration of System Control Unit>

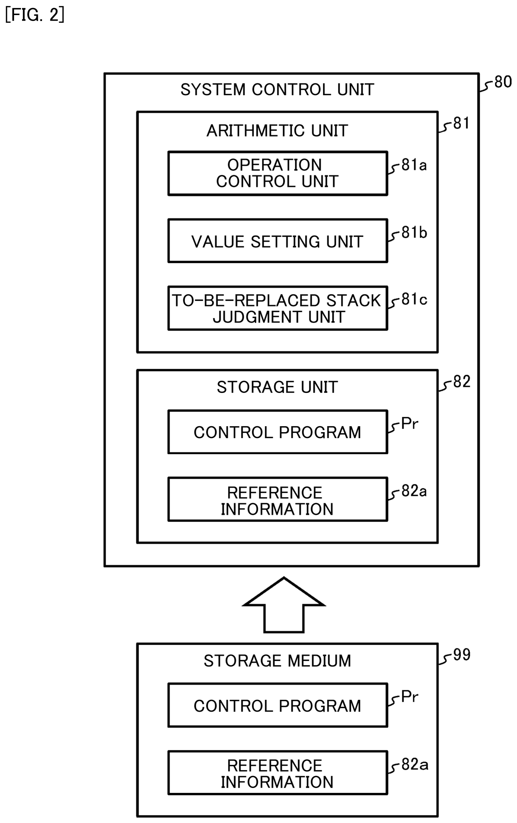

A configuration of the system control unit 80 will be described below with reference to FIG. 2. FIG. 2 is an internal block diagram of the system control unit 80.

As shown in FIG. 2, the system control unit 80 has an arithmetic unit 81 and a storage unit 82. The arithmetic unit 81 has an operation control unit 81a, a value setting unit 81b, and a to-be-replaced stack judgment unit 81c.

The operation control unit 81a is a constituent element that controls the hydrogen production operation of the water electrolysis system 100.

The value setting unit 81b is a constituent element that sets various parameters.

The to-be-replaced stack judgment unit 81c is a constituent element that judges whether any of the water electrolysis stacks 23 need to be replaced.

Also, the storage unit 82 stores reference information 82a and a control program Pr. The reference information 82a is information to be referred to at the time of executing a hydrogen production operation, setting various parameters, or in a similar situation. The control program Pr is a program that causes the arithmetic unit 81 to function as the operation control unit 81a, the value setting unit 81b, and the to-be-replaced stack judgment unit 81c. The control program Pr is stored in a storage medium 99 and installed into the system control unit 80 directly or indirectly from the storage medium 99.

Data on the water electrolysis stack voltages, the water electrolysis cell voltages, the temperatures, pressures, and flow rates at portions of devices, and the like measured in the water electrolysis system 100 are managed by the system control unit 80. The system control unit 80 calculates amounts of operation necessary for stable operation of the water electrolysis stacks 23 based on these pieces of data and the reference information 82a (FIG. 2) registered in the storage unit 82 (FIG. 2) in advance. Then, the system control unit 80 transmits control signals to devices such as the valves, the pumps, and the coolers in the water electrolysis system 100 to control the devices.

<Pressure Adjustment System of Water Electrolysis System and Method of Controlling Same>

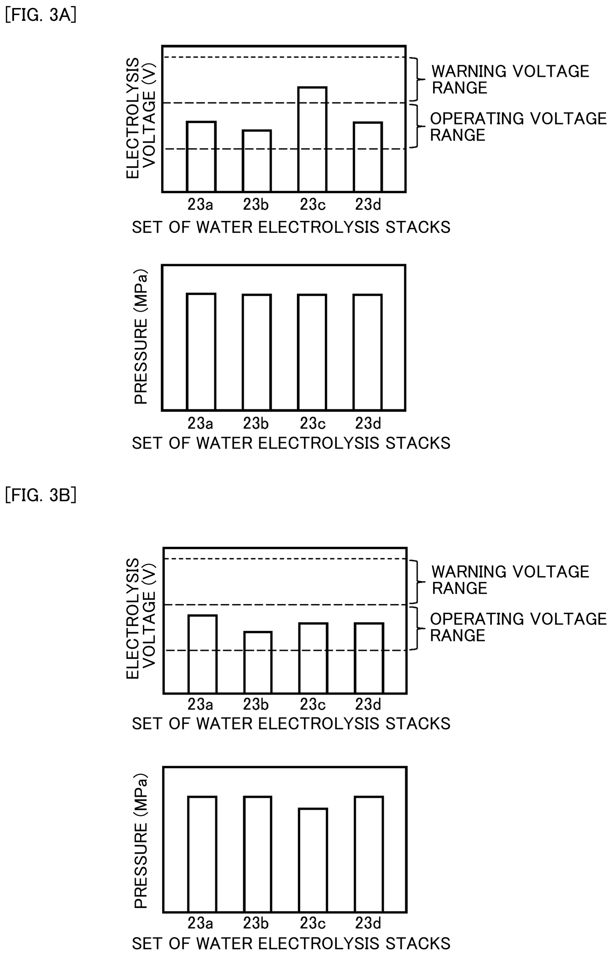

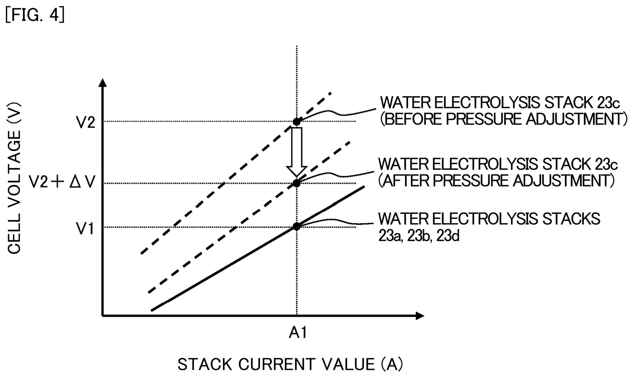

A pressure adjustment system of the water electrolysis system 100 and a method of controlling the same will be described below with reference to FIGs. 3A to 4. FIG. 3A is an explanatory diagram of the electrolysis voltages of water electrolysis stacks 23 before a pressure adjustment. FIG. 3B is an explanatory diagram of the electrolysis voltages of the water electrolysis stacks 23 after a pressure adjustment. FIG. 4 is a graph between the stack current value and cell voltage of each water electrolysis stack 23.

In the following, the pressure adjustment system of the water electrolysis system 100 and the method of controlling the same will be described based on the configuration of the water electrolysis system 100 shown in FIG. 1. Note that the pressure systems connected to the gas tanks are not limited to the two systems for normal pressure and low pressure shown in FIG. 1, and a single pressure system or multiple pressure systems can be installed. The configuration of the water electrolysis system 100 is not limited to the configuration in FIG. 1. Also, as the electrolysis voltage control points, it is possible to use not only the electrolysis voltages of the water electrolysis stacks 23 but also their cell voltages as control points.

As mentioned earlier, the water electrolysis system 100 measures the electrolysis voltage of each individual water electrolysis stack 23 and adjusts the pressure adjustment valves 32a and the pressure adjustment valves 42a of any water electrolysis stacks 23 with high electrolysis voltages to lower their pressures. By doing so, the water electrolysis system 100 lowers the voltages of the water electrolysis stacks 23 with high electrolysis voltages, thereby reducing the voltage difference between the water electrolysis stacks 23 with high electrolysis voltages and the other water electrolysis stacks. The water electrolysis system 100 as above is capable of operating with the electrolysis efficiency of the water electrolysis stacks 23 enhanced.

FIGs. 3A and 3B show an example of a pressure adjustment for a set of water electrolysis stacks. Note that FIGs. 3A and FIG. 3B show an example with a configuration including four water electrolysis stacks 23a to 23d, but do not show the actual number of water electrolysis stacks 23. That is, the number of water electrolysis stacks 23 is not limited to four.

As shown in the top diagram in FIG. 3A and the top diagram in FIG. 3B, it is desirable to define an operating voltage range and a warning voltage range for the water electrolysis stacks 23 for the operation (hydrogen production operation) of the water electrolysis system 100. The operating voltage range is a voltage range within which hydrogen can be produced stably with high efficiency for a long period of time. The warning voltage range, on the other hand, represents a voltage range within which operating the water electrolysis stack 23 for a predetermined time is expected to cause a decrease in performance, breakage, or the like. These voltage ranges are dependent on characteristics of the water electrolysis stack 23. Thus, it is desirable to measure the characteristics of the water electrolysis stacks 23 to be used and set each voltage range before actually constructing the water electrolysis system 100.

The top diagram in FIG. 3A shows the electrolysis voltages of the water electrolysis stacks 23a to 23d during operation. Also, the bottom diagram in FIG. 3A shows the pressures in the water electrolysis stacks 23a to 23d (internal pressures) during operation. The water electrolysis system 100 is such that, if the pressures in the water electrolysis stacks 23a to 23d during operation are made even as shown in the bottom diagram in FIG. 3A, the electrolysis voltages of the water electrolysis stacks 23a to 23d during operation vary as shown in the bottom diagram in FIG. 3A. Here, there may be a water electrolysis stack 23 that operates with an electrolysis voltage exceeding the operating voltage range into the warning voltage range, like the water electrolysis stack 23c shown in the top diagram in FIG. 3A. In the example shown in the top diagram in FIG. 3A, the water electrolysis stacks 23a, 23b, and 23d operate with electrolysis voltages within the operating voltage range whereas the water electrolysis stack 23c operates with an electrolysis voltage within the warning voltage range.

To address this, in the present embodiment, the pressure adjustment valves 32a and 42a connected to the water electrolysis stack 23c are adjusted to lower the pressure of the hydrogen gas or the oxygen gas from the water electrolysis stack 23c. The gas pressure adjustment may be done such that the pressures of both gases are adjusted to similar pressures or changed within a range within which a differential pressure is tolerated between the electrode cells on the hydrogen generating side incorporated in the water electrolysis stack 23c (not shown) and the electrode cells on the oxygen generating side (not shown). In this way, the water electrolysis system 100 can adjust only the pressure of the hydrogen gas or the oxygen gas from the water electrolysis stack 23c. As a result, although the pressures in the water electrolysis stacks 23a to 23d during operation somewhat vary as shown in the bottom diagram in FIG. 3B, the electrolysis voltage of the water electrolysis stack 23c can be adjusted to drop from the warning voltage range to the operating voltage range while the voltages of the water electrolysis stacks 23a, 23b, and 23d are maintained as shown in the top diagram in FIG. 3B.

FIG. 4 shows the characteristics of stack current values (A) and cell voltage values (V) of the water electrolysis stacks 23a to 23d before and after the pressure adjustment shown in FIGs. 3A and 3B.

In the example shown in FIG. 4, assuming that the current values applied to the water electrolysis stacks 23a to 23d are A1 (ampere) and the voltages of the water electrolysis stacks 23a, 23b, and 23d at that time are V1 (volt), the voltage of the water electrolysis stack 23c is V2 (volt). The electrolysis voltage of the water electrolysis stack 23c is assumed to be higher than those of the other water electrolysis stacks due to higher resistance.

Note that the currents applied to the water electrolysis stacks 23a to 23d are constantly A1 (ampere). Thus, the water electrolysis stack 23c with higher resistance is assumed to be higher in temperature than the other water electrolysis stacks.

Note that, in the present embodiment, an example of the pressure adjustment through voltage measurement has been shown, but it is preferable to additionally measure the temperature of each individual water electrolysis stack 23 in order to implement a more accurate pressure adjustment.

Further, the voltage of the water electrolysis stack 23c after the pressure adjustment is expected to drop to V2+$\Delta$V (volt). Here, $\Delta$V (volt) varies according to the difference in gas pressure between before and after the pressure adjustment, and is proportional to this pressure difference. The water electrolysis system 100 has a calculation algorithm, as part of the control program Pr stored in the storage unit 82, for calculating the electrolysis voltage at a target pressure in an individual water electrolysis stack 23 in a case where the water electrolysis stack 23 needs a pressure adjustment. Also, the water electrolysis system 100 has a control algorithm that controls the pressure adjustment valves 32, 32a, 42, and 42a as part of the control program stored in the storage unit 82.

The water electrolysis system 100 controls the water flow rate adjustment valves 21 and the small coolers 22 to cool water delivered to the water electrolysis stack 23c from the water tank 11 and store it in the water electrolysis stack 23c. This allows the water electrolysis system 100 to cool the water electrolysis stack 23c. Thus, in the water electrolysis system 100, a decrease in resistance resulting from a pressure adjustment reduces the amount of heat generation, which in turn lowers the temperature of the water electrolysis stack 23. It is therefore desired to adjust the amount of heat removal by these.

The amount of heat generation by a water electrolysis stack 23 is a value obtained by multiplying an excess electrolysis voltage, i.e., a value obtained by subtracting a theoretical electrolysis voltage from the electrolysis voltage, by the current value. With the water electrolysis stack 23c, the amount of heat generation decreases by "A1 $\times$ $\Delta$V" from "A1 $\times$ (V2 - Theoretical Electrolysis Voltage)" to "A1 $\times$ (V2 + $\Delta$V - Theoretical Electrolysis Voltage)" as a result of the pressure adjustment.

The water electrolysis system 100 performs a pressure adjustment on each individual water electrolysis stack 23. The pressure adjustment of each individual water electrolysis stack 23 may be performed multiple times. A water electrolysis stack 23 within a warning pressure range can continue operating without lowering the voltage efficiency or reducing the amount of hydrogen production by adjusting the pressure through a similar process.

Note that while the setting of an operating temperature range and a warning temperature range for pressure adjustment has been described in this section, it is desirable to similarly set an operating temperature range and a warning temperature range for temperature adjustment as well. For a water electrolysis stack 23 operating with an electrolysis voltage within the warning temperature range, the temperature of the water electrolysis stack 23 can be controlled to be within the operating temperature range via control that increases the flow rate of water to be supplied.

Also, during normal operation, the water electrolysis system 100 can control the electrolysis voltages of the water electrolysis stacks 23 by adjusting the pressure adjustment valves 32a and 42a. However, adjusting the pressure adjustment valves 32a and 42a may not be able to make the electrolysis voltage of a water electrolysis stack 23 drop from the warning voltage range to the operating voltage range. For example, in a case such as when the gases generated in many of the electrode cells in a water electrolysis stack 23 stagnate and impede the electrode reactions or when the deterioration of the electrode cells has progressed causing significant unevenness in the reaction distribution on the electrode surfaces of the electrode cells, adjusting the pressure adjustment valves 32a and 42a may not be able to make the electrolysis voltage of the water electrolysis stack 23 drop from the warning voltage range to the operating voltage range.

To address this, for any water electrolysis stacks 23 whose electrolysis voltage cannot be lowered from the warning voltage range to the operating voltage range, the water electrolysis system 100 performs an operation of changing the pressures of the generated gases and the flow rate of water supplied to the water electrolysis stacks 23. This changing operation may be performed multiple times. Also, the order is not limited for this changing operation.

With this changing operation, the water electrolysis system 100 can remove the gases stagnating in the electrode cells (not shown) of the water electrolysis stacks 23 or change the reaction distribution on the electrode surfaces of the electrode cells (not shown). The water electrolysis system 100 can thus lower the electrolysis voltages of the water electrolysis stacks 23 from the warning voltage range to the operating voltage range. As a result, the water electrolysis system 100 can recover the electrolysis voltages of the water electrolysis stacks 23. Then, the water electrolysis system 100 can operate with the operating conditions of the water electrolysis stacks 23 returned to the initial pressure, temperature, and flow rate.

Further, for any water electrolysis stacks 23 that have been subjected to an electrolysis voltage recovery process but failed to recover their electrolysis voltage, the water electrolysis system 100 can change a parameter or parameters to be used as operating conditions to any operation values. The parameter or parameters to be used as operating conditions can be, for example, one parameter among the pressures of the generated gases (hydrogen gas and oxygen gas), the flow rate of water supplied to the water electrolysis stack 23, and the temperature of the water electrolysis stack 23 or a combination of multiple ones of the parameters. The parameter or parameters to be used as operating conditions are not the operating conditions of the water electrolysis stack 23 with the initial pressure, temperature, and flow rate. The water electrolysis system 100 has a control algorithm that changes the parameter or parameters to be used as the operating conditions to any operation values as part of the control program Pr stored in the storage unit 82. This allows the water electrolysis system 100 to change the parameter or parameters to any operation values to re-set the operating conditions and lower the electrolysis voltages of the water electrolysis stacks 23 from the warning voltage range to the operating voltage range.

Also, the water electrolysis system 100 has the to-be-replaced stack judgment unit 81c, which judges whether to replace a water electrolysis stack 23 that has been subjected to electrolysis voltage recovery processes but failed to recover its electrolysis voltage.

<Operation of Water Electrolysis System>

During a hydrogen production operation, the water electrolysis system 100 performs voltage monitoring on each water electrolysis stack 23 and, for a water electrolysis stack 23 whose electrolysis voltage is detected to have risen by the voltage monitoring (hereinafter referred to also as "target stack"), performs a process of recovering the electrolysis voltage by temporarily changing an operating condition or conditions. Such an operation is mainly performed by the system control unit 80 of the water electrolysis system 100.

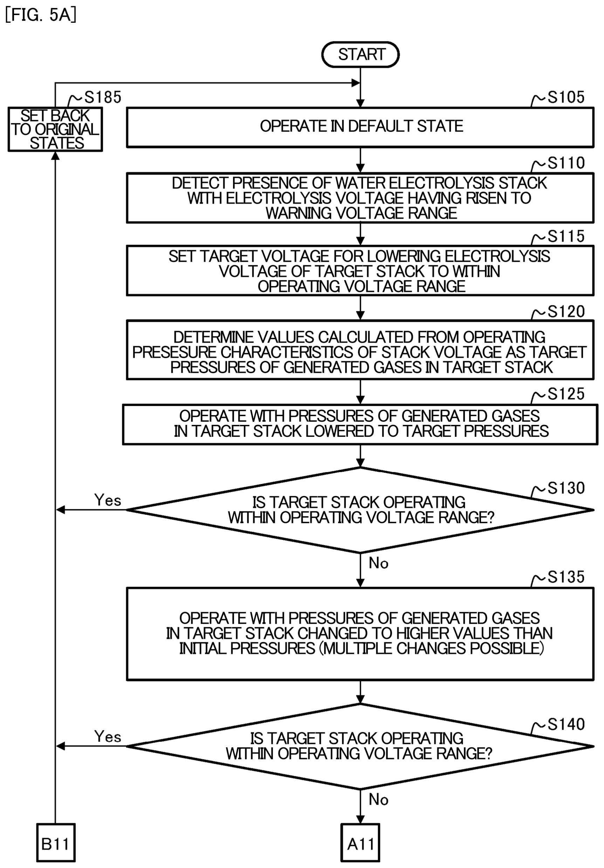

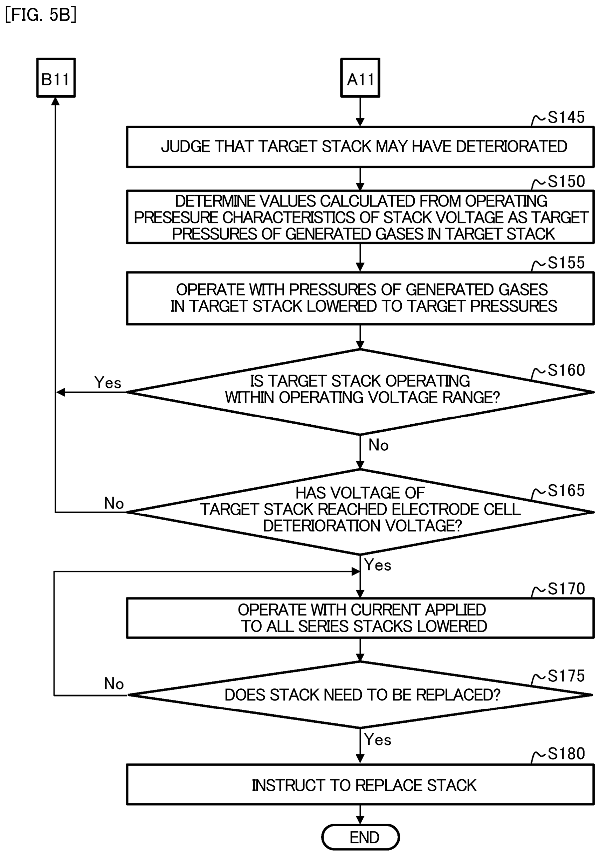

Here, "temporarily" means to stop the hydrogen production operation ("OPERATE IN DEFAULT STATE" in step S105 shown in FIG. 5A, etc.), perform a process of recovering the electrolysis voltage, and then resume the hydrogen production operation (step S105 shown in FIG. 5A, etc.). Also, "temporarily changing an operating condition or conditions" means, for example, to make changes between step S125 and S185 (in steps S125, S135, and S155) in the example shown in FIGs. 5A and 5B.

The process of recovering the electrolysis voltage of the target stack is performed to remove the gases stagnating in the electrode cells (not shown) incorporated in the target stack. The removed gases are each discharged from the target stack to the outside (the hydrogen gas tank 51, the low-pressure hydrogen gas tank 51a, the oxygen gas tank 52, or the low-pressure oxygen gas tank 52a) through the separation tank 31 or the separation tank 41.

In the following, a description will be given to clarify the process of recovering the electrolysis voltage of the target stack. The process of recovering the electrolysis voltage of the target stack involves a process in which one parameter among the pressures of the generated gases (hydrogen gas and oxygen gas), the flow rate of water supplied to the water electrolysis stack 23, and the temperature of the water electrolysis stack 23 or a combination of multiple ones of the parameters are changed to any operation values to lower the electrolysis voltage to the operating voltage range. In this section, a first example to a fourth example will be described with reference to FIGs. 5A to 8B as examples of a process of recovering the electrolysis voltage of a target stack as above.

(First Example)

The operation of the water electrolysis system 100 in a case of performing a process of recovering the electrolysis voltage of a target stack in the first example will be described below with reference to FIGs. 5A and 5B. FIGs. 5A and 5B are each a flowchart showing the operation in the first example in the case of performing a process of recovering the electrolysis voltage. In the first example, the process of recovering the electrolysis voltage of a target stack is performed by adjusting the pressures of the generated gases.

Note that the flow shown in FIGs. 5A and 5B is created on the assumption that the water electrolysis stack 23c shown in FIGs. 3A to 4 is the water electrolysis stack 23 to be subjected to the electrolysis voltage recovery process. In the actual flow, when there are water electrolysis stacks 23 to be subjected to the electrolysis voltage recovery process, the electrolysis voltage recovery process may be performed on those water electrolysis stacks 23.

As shown in FIG. 5A, first, the water electrolysis system 100 performs a hydrogen production operation in a default state with the operation control unit 81a (FIG. 2) (step S105). Initial parameters for hydrogen production operation have been stored in the storage unit 82 (FIG. 2) in advance, and the hydrogen production operation in the default state is performed based on those parameters.

After step S105, the water electrolysis system 100 detects the presence of a water electrolysis stack with an electrolysis voltage having risen to the warning voltage range (target stack) with the operation control unit 81a (FIG. 2) (step S110). Here, the water electrolysis stack 23c shown in the top diagram in FIG. 3A is the target stack.

After step S110, for the target stack (water electrolysis stack 23c), the water electrolysis system 100 sets a target voltage for lowering the electrolysis voltage of the target stack (water electrolysis stack 23c) to within the operating voltage range with the value setting unit 81b (FIG. 2) (step S115). At this time, based on an electrolytic characteristic (pressure dependence) of the target stack (water electrolysis stack 23c), the water electrolysis system 100 calculates the electrolysis voltage ($V2 + \Delta V$) volt (FIG. 4) as a target voltage for adjusting the internal pressure of the target stack (water electrolysis stack 23c).

After step S115, the water electrolysis system 100 determines values calculated from operating pressure characteristics of the target stack (water electrolysis stack 23c) as target pressures of the generated gases in the target stack (water electrolysis stack 23c) with the value setting unit 81b (FIG. 2) (step S120). The target pressures determined here are lower values than the initial pressures (the pressures at the time of step S105). In the first example, the target voltage set in step S115 and the target pressures determined in step S120 are used as operating conditions for performing the process of recovering the electrolysis voltage of the target stack.

After step S120, the water electrolysis system 100 performs a hydrogen production operation with the operation control unit 81a (FIG. 2) with the pressures of the generated gases in the target stack (water electrolysis stack 23c) lowered to the target pressures with the value setting unit 81b (FIG. 2) (step S125). At this time, the water electrolysis system 100 adjusts the opening degrees of the pressure adjustment valve 32a and the pressure adjustment valve 42a connected to the water electrolysis stack 23c to lower the pressures of the hydrogen gas and the oxygen gas being the generated gases in the water electrolysis stack 23c to the target pressures. Note that the adjustment of the pressures of the hydrogen gas and the oxygen gas may be performed such that the pressure values will be similar or such that the pressure values will be different within a range within which a differential pressure is tolerated between the hydrogen generating electrode and the oxygen generating electrode.

The process of step S125 is a first electrolysis voltage recovery process for the target stack. The present example will be described on the assumption that the first electrolysis voltage recovery process for the target stack is performed regardless of the degree of deterioration of the electrode cells (not shown) incorporated in the target stack.

After step S125, the water electrolysis system 100 judges whether the target stack (water electrolysis stack 23c) is operating within the operating voltage range with the operation control unit 81a (FIG. 2) (step S130). The judgment in step S130 is synonymous with judging whether the electrolysis voltage of the target stack (water electrolysis stack 23c) has dropped from the warning voltage range to the operating voltage range as shown in the top diagram in FIG. 3A and the top diagram in FIG. 3B.

If it is judged in step S130 that the target stack (water electrolysis stack 23c) is operating within the operating voltage range ("Yes"), the processing proceeds to step S185. In this case, the water electrolysis system 100 returns the pressures, changed (lowered) in step S125, of the generated gases in the target stack (water electrolysis stack 23c) to the original states (initial pressures) with the value setting unit 81b (FIG. 2) (step S185). Thereafter, the processing returns to step S105. The water electrolysis system 100 then performs a hydrogen production operation in the default state again in step S105. That is, if it is judged in step S130 that the target stack (water electrolysis stack 23c) is operating within the operating voltage range ("Yes"), the water electrolysis system 100 judges that the process of recovering the electrolysis voltage of the target stack has been completed. The water electrolysis system 100 then terminates the process of recovering the electrolysis voltage of the target stack, performs a pressure changing operation to return the pressures of the generated gases changed (lowered) in step S125 to the original states (initial pressures), and performs a hydrogen production operation in the default state again.

If, on the other hand, it is judged in step S130 that the target stack (water electrolysis stack 23c) is not operating within the operating voltage range ("No"), the processing proceeds to step S135. In this case, the water electrolysis system 100 performs a hydrogen production operation with the operation control unit 81a (FIG. 2) with the pressures of the generated gases in the target stack (water electrolysis stack 23c) changed to higher values than the initial pressures with the value setting unit 81b (FIG. 2) (step S135). The changing of the pressures of the generated gases (changing to higher pressures) can be performed multiple times.

After step S135, the water electrolysis system 100 judges whether the target stack (water electrolysis stack 23c) is operating within the operating voltage range with the operation control unit 81a (FIG. 2) (step S140), as in step S130.

If it is judged in step S140 that the target stack (water electrolysis stack 23c) is operating within the operating voltage range ("Yes"), the processing proceeds to step S185. Thereafter, the processing returns to step S105. That is, if it is judged in step S140 that the target stack (water electrolysis stack 23c) is operating within the operating voltage range ("Yes"), the water electrolysis system 100 judges that the process of recovering the electrolysis voltage of the target stack has been completed. The water electrolysis system 100 then terminates the process of recovering the electrolysis voltage of the target stack, performs a pressure changing operation to return the pressures of the generated gases changed (lowered) in step S135 to the original states (initial pressures), and performs a hydrogen production operation in the default state again.

If, on the other hand, it is judged in step S140 that the target stack (water electrolysis stack 23c) is not operating within the operating voltage range ("No"), the processing proceeds to step S145 shown in FIG. 5B through reference sign "A11". In this case, the operation control unit 81a (FIG. 2) of the water electrolysis system 100 judges that the electrode cells (not shown) incorporated in the target stack (water electrolysis stack 23c) may have deteriorated (step S145 in FIG. 5B).

After step S145, the water electrolysis system 100 determines values calculated from operating pressure characteristics of the target stack (water electrolysis stack 23c) as target pressures of the generated gases in the target stack (water electrolysis stack 23c) with the value setting unit 81b (FIG. 2) (step S150), as in step S120. The target pressures determined here are lower values than the initial pressures (the pressures at the time of step S105).

After step S150, the water electrolysis system 100 performs a hydrogen production operation with the operation control unit 81a (FIG. 2) with the pressures of the generated gases in the target stack (water electrolysis stack 23c) lowered to the target pressures with the value setting unit 81b (FIG. 2) (step S155), as in step S125.

The process of step S155 is a second electrolysis voltage recovery process for the target stack. The present example will be described on the assumption that the second electrolysis voltage recovery process for the target stack is performed when the electrode cells (not shown) incorporated in the target stack may have deteriorated.

After step S155, the water electrolysis system 100 judges whether the target stack (water electrolysis stack 23c) is operating within the operating voltage range with the operation control unit 81a (FIG. 2) (step S160), as in step S130.

If it is judged in step S160 that the target stack (water electrolysis stack 23c) is operating within the operating voltage range ("Yes"), the processing proceeds to step S185 shown in FIG. 5A through reference sign "B11". In this case, the water electrolysis system 100 returns the pressures, changed (lowered) in step S155, of the generated gases in the target stack (water electrolysis stack 23c) to the original states (initial pressures) with the value setting unit 81b (FIG. 2) (step S185 in FIG. 5A). Thereafter, the processing returns to step S105.

If, on the other hand, it is judged in step S160 that the target stack (water electrolysis stack 23c) is not operating within the operating voltage range ("No"), the processing proceeds to step S165. In this case, the water electrolysis system 100 judges whether the electrolysis voltage of the target stack (water electrolysis stack 23c) has reached a voltage with which the electrode cells (not shown) incorporated in the target stack can be assumed to have deteriorated (hereinafter referred to also as "deterioration voltage") with the operation control unit 81a (FIG. 2) (step S165).

If it is judged in step S165 that the electrolysis voltage of the target stack (water electrolysis stack 23c) has not reached the deterioration voltage ("No"), the processing proceeds to step S185 shown in FIG. 5A through reference sign "B11". In this case, the water electrolysis system 100 returns the pressures of the generated gases in the target stack (water electrolysis stack 23c) changed (lowered) in step S155 to the original states (initial pressures) with the value setting unit 81b (FIG. 2) (step S185 in FIG. 5A). Thereafter, the processing returns to step S105.

If, on the other hand, it is judged in step S165 that the electrolysis voltage of the target stack (water electrolysis stack 23c) has reached the deterioration voltage ("Yes"), the processing proceeds to step S170. That is, in this case, the water electrolysis system 100 judges that the electrode cells (not shown) of the target stack have deteriorated. In this case, it is desirable to lower the current value of each water electrolysis stack 23 including the target stack. Thus, in this case, the water electrolysis system 100 performs a hydrogen production operation with the operation control unit 81a (FIG. 2) with the current applied lowered for all of the water electrolysis stacks 23 connected in series to the target stack (water electrolysis stack 23c) (hereinafter referred to also as "series stacks") with the value setting unit 81b (FIG. 2) (step S170).

The process of step S170 is a process in which a hydrogen production operation is performed while lowering the excess reaction voltage of the target stack that has been subjected to electrolysis voltage recovery processes but failed to recover its electrolysis voltage by lowering the pressures of the generated gases to lower values than the initial pressures. Here, "excess reaction voltage" means, for example, a phenomenon in which the generated gases (hydrogen gas and oxygen gas) stagnate in the incorporated electrode cells (not shown) raising the electrolysis voltage, as with the water electrolysis stack 23c shown in the top diagram in FIG. 3A. The process of step S170 is performed in order to reduce the frequency of replacement of the target stack and improve the hydrogen production efficiency.

After step S170, the water electrolysis system 100 judges whether the target stack (water electrolysis stack 23c) needs to be replaced with the to-be-replaced stack judgment unit 81c (FIG. 2) (step S175).

The judgment in step S175 is made based on the following conditional expression (1), for example.

Profit by Continuing Electrolytic Hydrogen Production < (Profit by Electrolytic Hydrogen Production after Replacement - Cost of Replacing Target Stack) (1)

If the conditional expression (1) is met, it is judged that the target stack needs to be replaced and if, on the other hand, the conditional expression (1) is not met, it is judged that the target stack does not need to be replaced.

The judgment in step S175 involves calculating and comparing a profit that can be earned from the amount of hydrogen producible in a predetermined operation period without the target stack replaced and a profit that can be earned from the amount of hydrogen producible in the predetermined operation period with the target stack replaced. The water electrolysis system 100 notifies the user of a warning that prompts replacement of the target stack if the profit with the target stack replaced taking the replacement cost into account is higher than the profit without the target stack replaced. In response to this, the user stops the water electrolysis system 100, replaces the target stack with another water electrolysis stack 23, and causes the water electrolysis system 100 to resume operating.

If it is judged in step S175 that the target stack (water electrolysis stack 23c) does not need to be replaced ("No"), the processing returns to step S170. Note that, in this case, the processing may, for example, proceed to step S185 in FIG. 5A when a given predetermined condition is met or with given timing.

If, on the other hand, it is judged in step S175 that the target stack (water electrolysis stack 23c) needs to be replaced ("Yes"), the water electrolysis system 100 instructs the user to replace the target stack (water electrolysis stack 23c) by notifying them of a warning that prompts replacement of the target stack (water electrolysis stack 23c) with the to-be-replaced stack judgment unit 81c (FIG. 2).

In the first example as described above, if the electrolysis voltage of a target stack drops from the warning voltage range to the operating voltage range ("Yes" in step S130) after an operation of changing the target voltage and target pressures serving as operating conditions, the process of recovering the electrolysis voltage of the target stack is terminated, and a hydrogen production operation is performed (steps S185 and S105). In the first example, if, on the other hand, the electrolysis voltage of the target stack does not drop from the warning voltage range to the operating voltage range ("No" in step S130) even after the operation of changing the target voltage and target pressures serving as operating conditions, a process of recovering the electrolysis voltage of the target stack is performed with the operating conditions changed (step S135). Further, in the first example, if the electrolysis voltage of the target stack does not still recover ("No" in step S140), a hydrogen production operation is performed finally with the current applied to all of the series stacks lowered (step S170).

Also, in the first example, it is possible to have the user replace the target stack with another water electrolysis stack 23 when the profit with the target stack replaced taking the replacement cost into account is higher than the profit without the target stack replaced.

Also, in the first example, the water electrolysis system 100, which has a series configuration with many stacks capable of utilizing a general large DC power supply, can continue stably producing hydrogen with high electrolysis efficiency at low cost.

(Second Example)

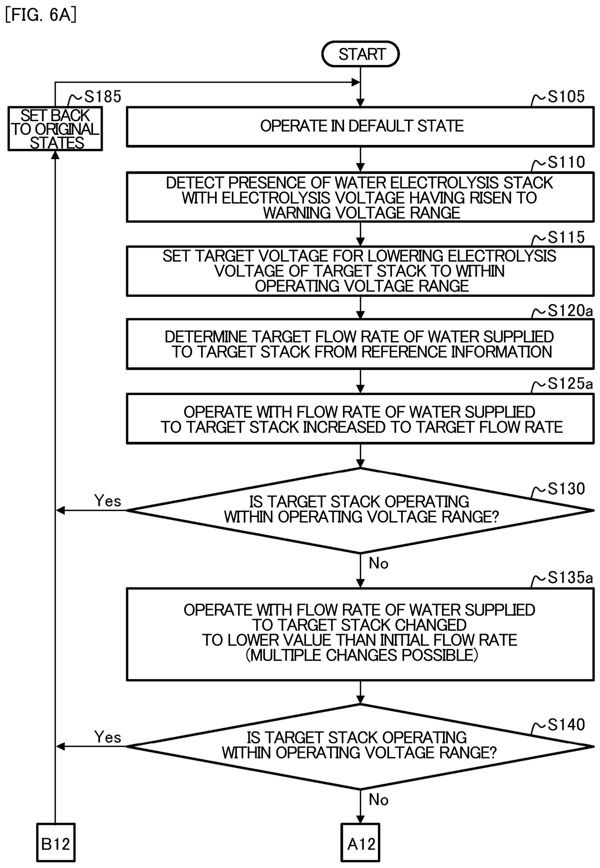

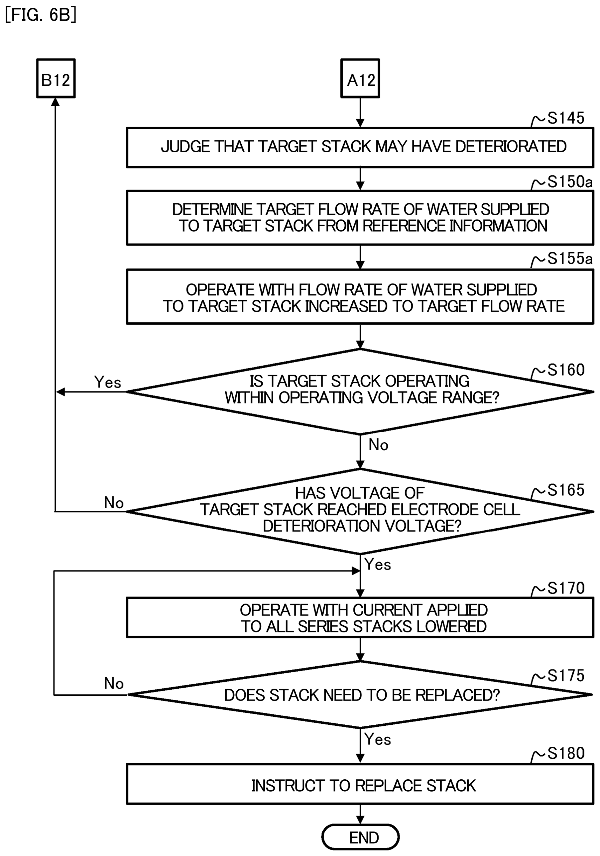

The operation of the water electrolysis system 100 in a case of performing a process of recovering the electrolysis voltage of a target stack in a second example will be described below with reference to FIGs. 6A and 6B. FIGs. 6A and 6B are each a flowchart showing the operation in the second example in the case of performing a process of recovering the electrolysis voltage. In the second example, the process of recovering the electrolysis voltage of the target stack is performed by adjusting the flow rate of water supplied to the water electrolysis stack 23.

As shown in FIGs. 6A and 6B, the second example differs from the first example (FIGs. 5A and 5B) in that processes of steps S120a, S125a, S135a, S150a, and S155a are performed instead of the processes of steps S120, S125, S135, S150, and S155.

As shown in FIG. 6A, in step S120a, for the target stack (water electrolysis stack 23c), the water electrolysis system 100 determines a target flow rate of the water supplied to the target stack (water electrolysis stack 23c) from the reference information 82a stored in the storage unit 82 with the value setting unit 81b (FIG. 2). The target flow rate determined at this time is a higher value than the initial flow rate (the flow rate at the time of step S105). In the second example, the target voltage set in step S115 and the target flow rate determined in step S120a are used as operating conditions for performing the process of recovering the electrolysis voltage of the target stack.

Also, in step S125a, for the target stack (water electrolysis stack 23c), the water electrolysis system 100 performs a hydrogen production operation with the operation control unit 81a (FIG. 2) with the flow rate of water supplied to the target stack (water electrolysis stack 23c) increased to the target flow rate with the operation control unit 81a (FIG. 2).

Also, in step S135a, for the target stack (water electrolysis stack 23c), the water electrolysis system 100 performs a hydrogen production operation with the operation control unit 81a (FIG. 2) with the flow rate of water supplied to the target stack (water electrolysis stack 23c) changed to a lower value than the initial flow rate with the value setting unit 81b (FIG. 2). The changing of the flow rate of water to be supplied (changing to a lower flow rate) can be performed multiple times. The water electrolysis system 100 re-sets the operating conditions with the control program Pr (FIG. 2).

Also, as shown in FIG. 6B, in step S150a, for the target stack (water electrolysis stack 23c), the water electrolysis system 100 determines a target flow rate of the water supplied to the target stack (water electrolysis stack 23c) from the reference information 82a stored in the storage unit 82 with the value setting unit 81b (FIG. 2), as in step S120a. The target flow rate determined at this time is a higher value than the initial flow rate (the flow rate at the time of step S105).

Also, in step S155a, the water electrolysis system 100 performs a hydrogen production operation with the operation control unit 81a (FIG. 2) with the pressures of the generated gases in the target stack (water electrolysis stack 23c) lowered to the target pressures with the value setting unit 81b (FIG. 2), as in step S125a.

The second example as described above (FIGs. 6A and 6B) differs from the first example (FIGs. 5A and 5B) in that an operation of changing the target voltage and the target flow rate as operating conditions is performed instead of an operation of changing the target voltage and the target pressures as operating conditions.

(Third Example)

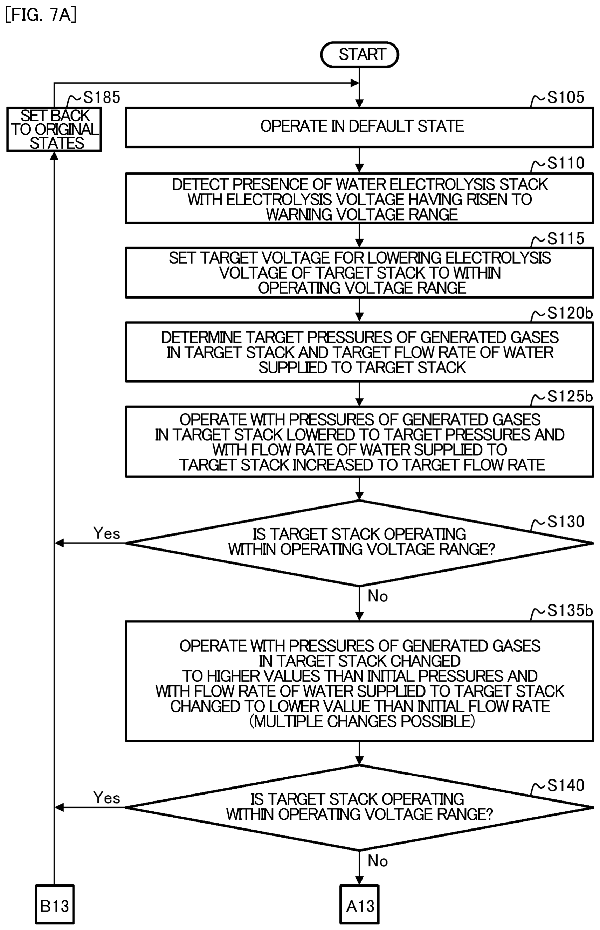

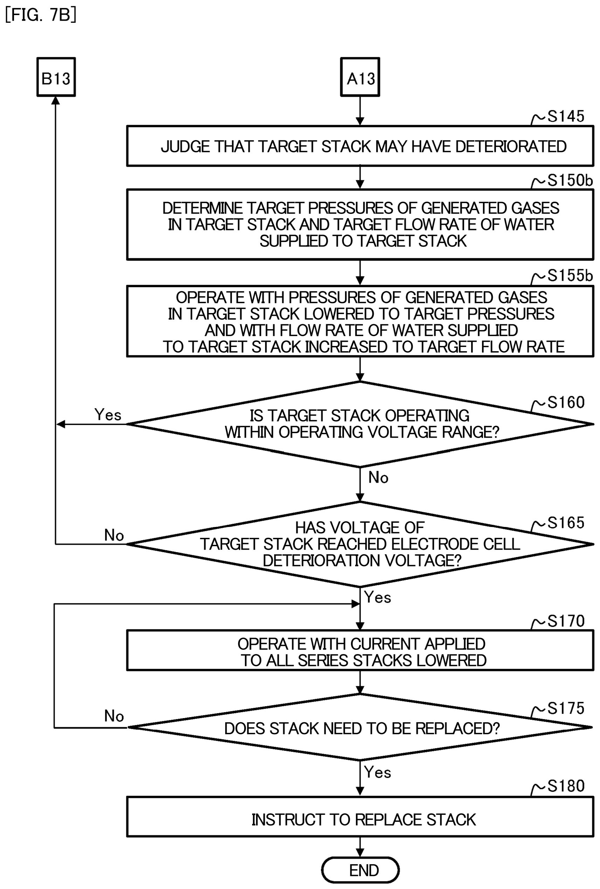

The operation of the water electrolysis system 100 in a case of performing a process of recovering the electrolysis voltage of a target stack in a third example will be described below with reference to FIGs. 7A and 7B. FIGs. 7A and 7B are each a flowchart showing the operation in the third example in the case of performing a process of recovering the electrolysis voltage. In the third example, the process of recovering the electrolysis voltage of the target stack is performed by adjusting the pressures of the generated gases and the flow rate of water supplied to the water electrolysis stack 23.

As shown in FIGs. 7A and 7B, the third example differs from the first example (FIGs. 5A and 5B) in that processes of steps S120b, S125b, S135b, S150b, and S155b are performed instead of the processes of steps S120, S125, S135, S150, and S155.

As shown in FIG. 7A, in step S120b, the water electrolysis system 100 determines target pressures of the generated gases in the target stack (water electrolysis stack 23c) and a target flow rate of the water supplied to the target stack with the value setting unit 81b (FIG. 2). The target pressures determined at this time are values calculated from operating pressure characteristics of the target stack (water electrolysis stack 23c) and are lower values than the initial pressures (the pressures at the time of step S105). Also, the target flow rate determined at this time is a value stored in the storage unit 82 as the reference information 82a and is a higher value than the initial flow rate (the flow rate at the time of step S105). In the third example, the target voltage set in step S115 and the target pressures and target flow rate determined in step S120b are used as operating conditions for performing the process of recovering the electrolysis voltage of the target stack.

Also, in step S125b, the water electrolysis system 100 lowers the pressures of the generated gases in the target stack (water electrolysis stack 23c) to the target pressures with the value setting unit 81b (FIG. 2). Also, the water electrolysis system 100 increases the flow rate of water supplied to the target stack (water electrolysis stack 23c) to the target flow rate with the value setting unit 81b (FIG. 2). Then, the water electrolysis system 100 performs a hydrogen production operation with the operation control unit 81a (FIG. 2).

Also, in step S135b, the water electrolysis system 100 changes the pressures of the generated gases in the target stack (water electrolysis stack 23c) to higher values than the initial pressures with the value setting unit 81b (FIG. 2). Also, the water electrolysis system 100 changes the flow rate of water supplied to the target stack (water electrolysis stack 23c) to a lower value than the initial flow rate with the value setting unit 81b (FIG. 2). Then, the water electrolysis system 100 performs a hydrogen production operation with the operation control unit 81a (FIG. 2). The changing of the pressures of the generated gases and the flow rate of water to be supplied (changing to higher pressures of the generated gases and a lower flow rate) can be performed multiple times. At this time, the water electrolysis system 100 may simultaneously perform the operation of changing the pressures of the generated gases and the operation of changing the flow rate of water to be supplied. Alternatively, at this time, the water electrolysis system 100 may alternately perform the operation of changing the pressures of the generated gases and the operation of changing the flow rate of water to be supplied. The gases may be removed from the electrode cells better by simultaneously performing the changing operations or by alternately performing the changing operations depending on the internal condition of the water electrolysis stack 23. Note that, in the case of alternately performing the changing operations, the order of the changing operations is not limited. However, the operation of changing the pressures of the generated gases has a higher direct effect on the gases attached to the electrode cells, and may thus be more effective than the operation of changing the flow rate of water to be supplied.

If it is judged in step S140 that the target stack (water electrolysis stack 23c) is operating within the operating voltage range ("Yes"), the water electrolysis system 100 judges that the process of recovering the electrolysis voltage of the target stack has been completed. The water electrolysis system 100 then terminates the process of recovering the electrolysis voltage of the target stack, performs a pressure changing operation to return the pressures of the generated gases changed (lowered) in step S125 to the original states (initial pressures), and performs a hydrogen production operation in the default state again.

Also, as shown in FIG. 7B, in step S150b, the water electrolysis system 100 determines target pressures of the generated gases in the target stack (water electrolysis stack 23c) and a target flow rate of the water supplied to the target stack with the value setting unit 81b (FIG. 2), as in step S120b. The target pressures determined at this time are values calculated from operating pressure characteristics of the target stack (water electrolysis stack 23c) and are lower values than the initial pressures (the pressures at the time of step S105). Also, the target flow rate determined at this time is a value stored in the storage unit 82 as the reference information 82a and is a higher value than the initial flow rate (the flow rate at the time of step S105).

Also, in step S155b, the water electrolysis system 100 lowers the pressures of the generated gases in the target stack (water electrolysis stack 23c) to the target pressures with the value setting unit 81b (FIG. 2), as in step S125b. Also, the water electrolysis system 100 increases the flow rate of water supplied to the target stack (water electrolysis stack 23c) to the target flow rate with the value setting unit 81b (FIG. 2). Then, the water electrolysis system 100 performs a hydrogen production operation with the operation control unit 81a (FIG. 2).

The third example as described above (FIGs. 7A and 7B) differs from the first example (FIGs. 5A and 5B) in that an operation of changing the target voltage, the target pressures, and the target flow rate as operating conditions is performed instead of an operation of changing the target voltage and the target pressures as operating conditions.

(Fourth Example)

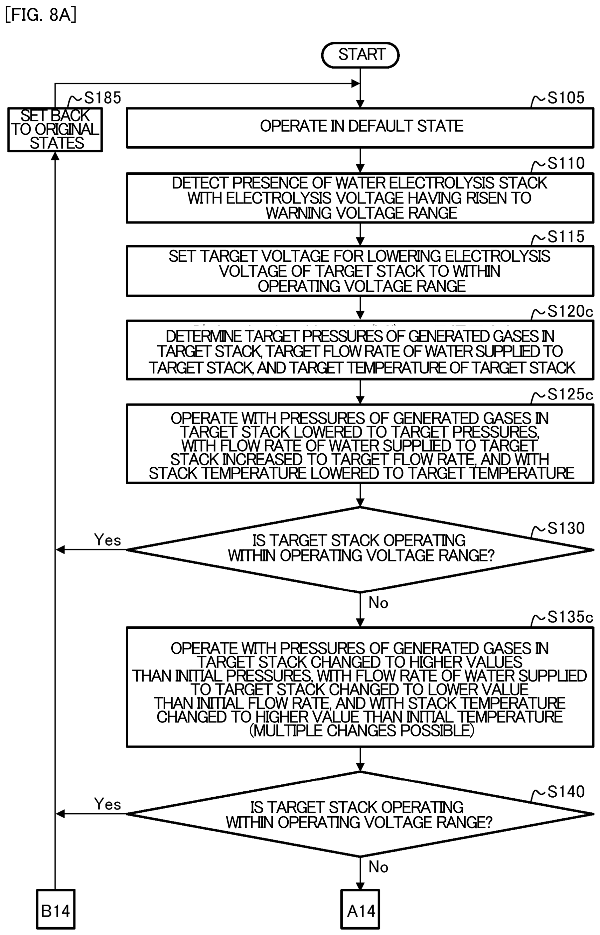

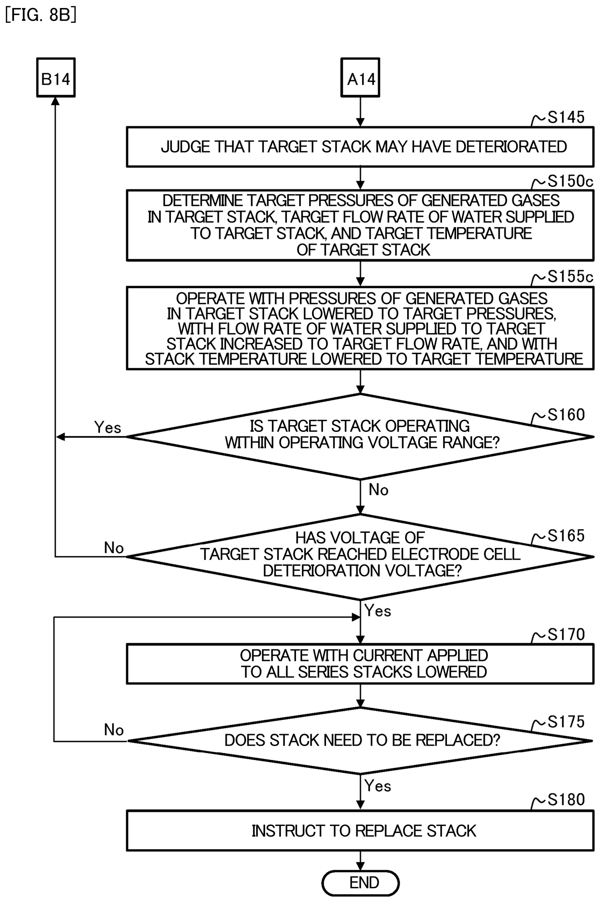

The operation of the water electrolysis system 100 in a case of performing a process of recovering the electrolysis voltage of a target stack in a fourth example will be described below with reference to FIGs. 8A and 8B. FIGs. 8A and 8B are each a flowchart showing the operation in the fourth example in the case of performing a process of recovering the electrolysis voltage. In the fourth example, the process of recovering the electrolysis voltage of the target stack is performed by adjusting the pressures of the generated gases, the flow rate of water supplied to the water electrolysis stack 23, and the temperature of the water electrolysis stack 23.

As shown in FIGs. 8A and 8B, the fourth example differs from the first example (FIGs. 5A and 5B) in that processes of steps S120c, S125c, S135c, S150c, and S155c are performed instead of the processes of steps S120, S125, S135, S150, and S155.

As shown in FIG. 8A, in step S120c, the water electrolysis system 100 determines target pressures of the generated gases in the target stack (water electrolysis stack 23c), a target flow rate of the water supplied to the target stack, and a target temperature for the target stack with the value setting unit 81b (FIG. 2). The target pressures determined at this time are values calculated from operating pressure characteristics of the target stack (water electrolysis stack 23c) and are lower values than the initial pressures (the pressures at the time of step S105). Also, the target flow rate determined at this time is a value stored in the storage unit 82 as the reference information 82a and is a higher value than the initial flow rate (the flow rate at the time of step S105). Also, the target temperature determined at this time is a value calculated from operating pressure characteristics of the target stack (water electrolysis stack 23c) and is a lower value than the initial temperature (the temperature at the time of step S105). In the fourth example, the target voltage set in step S115 and the target pressures, target flow rate, and target temperature determined in step S120c are used as operating conditions for performing the process of recovering the electrolysis voltage of the target stack.

Also, in step S125c, the water electrolysis system 100 lowers the pressures of the generated gases in the target stack (water electrolysis stack 23c) to the target pressures with the value setting unit 81b (FIG. 2). Also, the water electrolysis system 100 increases the flow rate of water supplied to the target stack (water electrolysis stack 23c) to the target flow rate with the value setting unit 81b (FIG. 2). Also, the water electrolysis system 100 lowers the temperature of the target stack (water electrolysis stack 23c) to the target temperature with the value setting unit 81b (FIG. 2). Then, the water electrolysis system 100 performs a hydrogen production operation with the operation control unit 81a (FIG. 2).

Also, in step S135c, the water electrolysis system 100 lowers the pressures of the generated gases in the target stack (water electrolysis stack 23c) to higher values than the initial pressures with the value setting unit 81b (FIG. 2). Also, the water electrolysis system 100 changes the flow rate of water supplied to the target stack (water electrolysis stack 23c) to a lower value than the initial flow rate with the value setting unit 81b (FIG. 2). Also, the water electrolysis system 100 changes the temperature of the target stack (water electrolysis stack 23c) to a higher value than the initial temperature with the value setting unit 81b (FIG. 2). Then, the water electrolysis system 100 performs a hydrogen production operation with the operation control unit 81a (FIG. 2). The changing of the pressures of the generated gases, the flow rate of water to be supplied, and the temperature of the target stack (changing to higher pressures of the generated gases, a lower flow rate, and a higher target stack temperature) can be performed multiple times.

Also, as shown in FIG. 8B, in step S150c, the water electrolysis system 100 determines target pressures of the generated gases in the target stack (water electrolysis stack 23c), a target flow rate of the water supplied to the target stack, and a target temperature for the target stack with the value setting unit 81b (FIG. 2), as in step S120c. The target pressures determined at this time are values calculated from operating pressure characteristics of the target stack (water electrolysis stack 23c) and are lower values than the initial pressures (the pressures at the time of step S105). Also, the target flow rate determined at this time is a value stored in the storage unit 82 as the reference information 82a and is a higher value than the initial flow rate (the flow rate at the time of step S105). Also, the target temperature determined at this time is a value calculated from operating pressure characteristics of the target stack (water electrolysis stack 23c) and is a lower value than the initial temperature (the temperature at the time of step S105).

Also, in step S155c, the water electrolysis system 100 lowers the pressures of the generated gases in the target stack (water electrolysis stack 23c) to the target pressures with the value setting unit 81b (FIG. 2), as in step S125c. Also, the water electrolysis system 100 increases the flow rate of water supplied to the target stack (water electrolysis stack 23c) to the target flow rate with the value setting unit 81b (FIG. 2). Also, the water electrolysis system 100 lowers the temperature of the target stack (water electrolysis stack 23c) to the target temperature with the value setting unit 81b (FIG. 2). Then, the water electrolysis system 100 performs a hydrogen production operation with the operation control unit 81a (FIG. 2).

The fourth example as described above (FIGs. 8A and 8B) differs from the first example (FIGs. 5A and 5B) in that an operation of changing the target voltage, the target pressures, the target flow rate, and the target temperature as operating conditions is performed instead of an operation of changing the target voltage and the target pressures as operating conditions.

<Main Characteristic Features of Water Electrolysis System>

(1) As shown in FIG. 1, the water electrolysis system 100 according to the present embodiment includes: multiple water electrolysis stacks 23 each of which generate a hydrogen gas and an oxygen gas from water as generated gases; a water tank 11 that supplies water to each water electrolysis stack 23; a hydrogen gas tank 51 that stores the hydrogen gas generated in each water electrolysis stack 23; an oxygen gas tank 52 that stores the oxygen gas generated in each water electrolysis stack 23; and a system control unit 80 that control an operation of each unit of the system. During a hydrogen production operation, the system control unit 80 performs voltage monitoring on each water electrolysis stack 23 and, for a water electrolysis stack 23 whose electrolysis voltage is detected to have risen by the voltage monitoring, performs a process of recovering the electrolysis voltage by temporarily changing an operating condition. Here, a "water electrolysis stack 23 whose electrolysis voltage is detected to have risen by the voltage monitoring" means a water electrolysis stack 23 whose electrolysis efficiency (performance) has decreased due to stagnation of the gases in the electrode cells (not shown) incorporated therein.

Such a water electrolysis system 100 according to the present embodiment performs a process of recovering the electrolysis efficiency (performance) of a water electrolysis stack 23 whose electrolysis voltage is detected to have risen by the voltage monitoring by temporarily changing an operating condition or conditions. In this way, the water electrolysis system 100 according to the present embodiment can remove the gases stagnating in the electrode cells (not shown) incorporated in the water electrolysis stack 23 to the outside, thereby recovering the electrolysis efficiency (performance) of the water electrolysis stack 23. Such a water electrolysis system 100 according to the present embodiment can minimize decrease in the electrolysis efficiency (performance) of each water electrolysis stack 23 provided in the system, and thus can reduce the frequency of replacement of water electrolysis stacks 23 and improve the hydrogen production efficiency. Also, the water electrolysis system 100 according to the present embodiment can reduce the replacement cost for replacing a water electrolysis stack 23 whose electrolysis efficiency (performance) has decreased with another water electrolysis stack 23 and the disposal cost for disposing of the water electrolysis stack 23 whose electrolysis efficiency (performance) has decreased.

(2) As shown in steps S125 and S185 in FIG. 5A, in the water electrolysis system 100 according to the present embodiment, the system control unit 80 may advantageously be configured to perform the process of recovering the electrolysis voltage of the water electrolysis stack 23 whose electrolysis voltage is detected to have risen by lowering the pressures of the generated gases, and then return the pressure in the water electrolysis stack 23 to the initial pressure.

Such a water electrolysis system 100 according to the present embodiment changes the pressure in a water electrolysis stack 23 whose electrolysis voltage has risen due to stagnation of the gases in the electrode cells (not shown) incorporated in the water electrolysis stack 23, for example, from 0.5 MPa to 0.4 MPa and back to 0.5 MPa. In this way, the water electrolysis system 100 according to the present embodiment can remove the gases stagnating in the electrode cells (not shown) of the water electrolysis stack 23 from the water electrolysis stack 23, thereby recovering the electrolysis efficiency (performance). Such a water electrolysis system 100 according to the present embodiment can minimize decrease in the electrolysis efficiency (performance) of each water electrolysis stack 23 provided in the system, and thus can reduce the frequency of replacement of water electrolysis stacks 23 and improve the hydrogen production efficiency.

(3) As shown in steps S125, S135, and S185 in FIG. 5A, in the water electrolysis system 100 according to the present embodiment, the system control unit 80 may be configured to, when returning the pressure in the water electrolysis stack 23 whose electrolysis voltage is detected to have risen to the initial pressure after lowering the pressures of the generated gases, raise the pressure to a higher value than the initial pressure and then return the pressure to the initial pressure or perform an operation to raise the pressure multiple times and then return the pressure to the initial pressure.

Such a water electrolysis system 100 according to the present embodiment changes the pressure in a water electrolysis stack 23 whose electrolysis voltage has risen due to stagnation of the gases in the electrode cells (not shown) incorporated in the water electrolysis stack 23, for example, from 0.5 MPa to 0.4 MPa to 0.6 MPa and back to 0.5 MPa. Alternatively, the water electrolysis system 100 according to the present embodiment performs an operation of changing the pressure in the water electrolysis stack 23 whose electrolysis voltage has risen multiple times. In this way, the water electrolysis system 100 according to the present embodiment can efficiently remove the gases stagnating in the electrode cells (not shown) of the water electrolysis stack 23 from the water electrolysis stack 23, thereby recovering the electrolysis efficiency (performance). Such a water electrolysis system 100 according to the present embodiment can minimize decrease in the electrolysis efficiency (performance) of each water electrolysis stack 23 provided in the system. Accordingly, the water electrolysis system 100 according to the present embodiment can reduce the frequency of replacement of water electrolysis stacks 23 and improve the hydrogen production efficiency.

(4) As shown in steps S155 to S170 in FIG. 5B, in the water electrolysis system 100 according to the present embodiment, the system control unit 80 may be configured to operate to generate a hydrogen gas and an oxygen gas from water while lowering the excess reaction voltage of a water electrolysis stack 23 that has been subjected to electrolysis voltage recovery processes but failed to recover its electrolysis voltage by lowering the pressures of the generated gases to lower values than the initial pressures.

Such a water electrolysis system 100 according to the present embodiment lowers the excess reaction voltage of a water electrolysis stack 23 that has been subjected to electrolysis voltage recovery processes but failed to recover its electrolysis voltage by lowering the pressures of the generated gases to lower values than the initial pressures. Then, the water electrolysis system 100 according to the present embodiment operates to generate a hydrogen gas and an oxygen gas from water with the excess reaction voltage of the water electrolysis stack 23 lowered. Such a water electrolysis system 100 according to the present embodiment can improve the hydrogen production efficiency (that is, improve the electrolysis efficiency (performance)) with the same current value.

(5) As shown in steps S125a and S185 in FIG. 6A, in the water electrolysis system 100 according to the present embodiment, the system control unit 80 may be configured to perform the process of recovering the electrolysis voltage of the water electrolysis stack 23 whose electrolysis voltage is detected to have risen by increasing the flow rate of water supplied to the water electrolysis stack 23, and then return the flow rate to the initial flow rate.

Such a water electrolysis system 100 according to the present embodiment changes the flow rate for a water electrolysis stack 23 whose electrolysis voltage has risen due to stagnation of the gases in the electrode cells (not shown) incorporated in the water electrolysis stack 23, for example, from 5 ml/s to 4 ml/s and back to 5 ml/s. In this way, the water electrolysis system 100 according to the present embodiment can remove the gases stagnating in the electrode cells (not shown) of the water electrolysis stack 23 from the water electrolysis stack 23, thereby recovering the electrolysis efficiency (performance). Such a water electrolysis system 100 according to the present embodiment can minimize decrease in the electrolysis efficiency (performance) of each water electrolysis stack 23 provided in the system, and thus can reduce the frequency of replacement of water electrolysis stacks 23 and improve the hydrogen production efficiency.

(6) As shown in steps S125a, S135a, and S185 in FIG. 6A, in the water electrolysis system 100 according to the present embodiment, the system control unit 80 may be configured to, when returning the flow rate of water supplied to the water electrolysis stack 23 to the initial flow rate after increasing the flow rate, lower the flow rate to a lower value than the initial flow rate and then return the flow rate to the initial flow rate or perform an operation to lower the flow rate multiple times and then return the flow rate to the initial flow rate.

Such a water electrolysis system 100 according to the present embodiment changes the flow rate for a water electrolysis stack 23 whose electrolysis voltage has risen due to stagnation of the gases in the electrode cells (not shown) incorporated in the water electrolysis stack 23, for example, from 5 ml/s to 4 ml/s to 6 ml/s and back to 5 ml/s. Alternatively, the water electrolysis system 100 according to the present embodiment performs an operation of lowering the flow rate for the water electrolysis stack 23 whose electrolysis voltage has risen multiple times. In this way, the water electrolysis system 100 according to the present embodiment can efficiently remove the gases stagnating in the electrode cells (not shown) of the water electrolysis stack 23 from the water electrolysis stack 23, thereby recovering the electrolysis efficiency (performance). Such a water electrolysis system 100 according to the present embodiment can minimize decrease in the electrolysis efficiency (performance) of each water electrolysis stack 23 provided in the system, and thus can reduce the frequency of replacement of water electrolysis stacks 23 and improve the hydrogen production efficiency.

(7) As shown in steps S155a to S170 in FIG. 6B, in the water electrolysis system 100 according to the present embodiment, the system control unit 80 may be configured to operate to generate a hydrogen gas and an oxygen gas from water while lowering the excess reaction voltage of a water electrolysis stack 23 that has been subjected to electrolysis voltage recovery processes but failed to recover its electrolysis voltage by increasing the flow rate of water supplied to the water electrolysis stack 23 to a higher value than the initial flow rate.

Such a water electrolysis system 100 according to the present embodiment lowers the excess reaction voltage of a water electrolysis stack 23 that has been subjected to electrolysis voltage recovery processes but failed to recover its electrolysis voltage by increasing the flow rate of water supplied to the water electrolysis stack 23 to a higher value than the initial flow rate. Then, the water electrolysis system 100 according to the present embodiment operates to generate a hydrogen gas and an oxygen gas from water with the excess reaction voltage of the water electrolysis stack 23 lowered. Such a water electrolysis system 100 according to the present embodiment can improve the hydrogen production efficiency (that is, improve the electrolysis efficiency (performance)) with the same current value.

(8) As shown in steps S125b and S185 in FIG. 7A, in the water electrolysis system 100 according to the present embodiment, the system control unit 80 may be configured to perform the process of recovering the electrolysis voltage of the water electrolysis stack 23 whose electrolysis voltage is detected to have risen by changing the pressures of the generated gases and the flow rate of water supplied to the water electrolysis stack 23 and then return the pressures and the flow rate to the initial pressures and the initial flow rate.

Such a water electrolysis system 100 according to the present embodiment simultaneously changes the pressures of the generated gases in a water electrolysis stack 23 whose electrolysis voltage has risen due to stagnation of the gases in the electrode cells (not shown) incorporated in the water electrolysis stack 23 and the flow rate of water supplied to the water electrolysis stack 23. Thereafter, the water electrolysis system 100 according to the present embodiment returns the pressures of the generated gases and the flow rate of water supplied to the water electrolysis stack 23 to the initial pressures and the initial flow rate. In this way, the water electrolysis system 100 according to the present embodiment can efficiently remove the gases stagnating in the electrode cells (not shown) of the water electrolysis stack 23 from the water electrolysis stack 23, thereby recovering the electrolysis efficiency (performance). Such a water electrolysis system 100 according to the present embodiment can minimize decrease in the electrolysis efficiency (performance) of each water electrolysis stack 23 provided in the system, and thus can reduce the frequency of replacement of water electrolysis stacks 23 and improve the hydrogen production efficiency. Note that the pressures of the generated gases and the flow rate of water supplied to the water electrolysis stack 23 may be changed simultaneously. Alternatively, the pressures of the generated gases and the flow rate of water supplied to the water electrolysis stack 23 may be changed alternately. The gases may be removed from the electrode cells better by one of the changing methods depending on the internal condition of the water electrolysis stack 23.

(9) As shown in steps S125b and S185 in FIG. 7A, in the water electrolysis system 100 according to the present embodiment, the system control unit 80 may be configured to perform the process of recovering the electrolysis voltage of the water electrolysis stack 23 whose electrolysis voltage is detected to have risen by changing the pressure of the hydrogen gas as a generated gas and/or the pressure of the oxygen gas as a generated gas, and the flow rate of water supplied to the water electrolysis stack 23 and then return the pressures of the generated gases and the flow rate to the initial pressures and the initial flow rate.

Such a water electrolysis system 100 according to the present embodiment changes the pressure of the hydrogen gas as a generated gas and/or the pressure of the oxygen gas as a generated gas, in a water electrolysis stack 23 whose electrolysis voltage has risen due to stagnation of the gases in the electrode cells (not shown) incorporated in the water electrolysis stack 23 and the flow rate of water supplied to the water electrolysis stack 23. Thereafter, the water electrolysis system 100 according to the present embodiment returns the pressures of the generated gases and the flow rate of water supplied to the water electrolysis stack 23 to the initial pressures and the initial flow rate. In this way, the water electrolysis system 100 according to the present embodiment can remove the gases stagnating in the electrode cells (not shown) of the water electrolysis stack 23 from the water electrolysis stack 23, thereby recovering the electrolysis efficiency (performance). Such a water electrolysis system 100 according to the present embodiment can minimize decrease in the electrolysis efficiency (performance) of each water electrolysis stack 23 provided in the system, and thus can reduce the frequency of replacement of water electrolysis stacks 23 and improve the hydrogen production efficiency.

(10) As shown in steps S155b to S170 in FIG. 7B, in the water electrolysis system 100 according to the present embodiment, the system control unit 80 may be configured to operate to generate a hydrogen gas and an oxygen gas from water while lowering the excess reaction voltage of a water electrolysis stack 23 that has been subjected to electrolysis voltage recovery processes but failed to recover its electrolysis voltage by lowering the pressures of the generated gases to lower values than the initial pressures and increasing the flow rate of water supplied to the water electrolysis stack 23 to a higher value than the initial flow rate.

Such a water electrolysis system 100 according to the present embodiment lowers the excess reaction voltage of a water electrolysis stack 23 that has been subjected to electrolysis voltage recovery processes but failed to recover its electrolysis voltage by lowering the pressures of the generated gases to lower values than the initial pressures and increasing the flow rate of water supplied to the water electrolysis stack 23 to a higher value than the initial flow rate. Then, the water electrolysis system 100 according to the present embodiment operates to generate a hydrogen gas and an oxygen gas from water with the excess reaction voltage of the water electrolysis stack 23 lowered. Such a water electrolysis system 100 according to the present embodiment can improve the hydrogen production efficiency (that is, improve the electrolysis efficiency (performance)) with the same current value.

(11) As shown in steps S125c and S185 in FIG. 8A, in the water electrolysis system 100 according to the present embodiment, the system control unit 80 may be configured to perform the process of recovering the electrolysis voltage of the water electrolysis stack 23 whose electrolysis voltage is detected to have risen by changing the pressures of the generated gases, the flow rate of water supplied to the water electrolysis stack 23, and the temperature of the water electrolysis stack 23 and then return the pressures, the flow rate, and the temperature to the initial pressures, the initial flow rate, and the initial temperature.

Such a water electrolysis system 100 according to the present embodiment changes the pressures of the generated gases in a water electrolysis stack 23 whose electrolysis voltage has risen due to stagnation of the gases in the electrode cells (not shown) incorporated in the water electrolysis stack 23, the flow rate of water supplied to the water electrolysis stack 23, and the temperature of the water electrolysis stack 23. In this way, the water electrolysis system 100 according to the present embodiment can remove the gases stagnating in the electrode cells (not shown) of the water electrolysis stack 23 from the water electrolysis stack 23, thereby recovering the electrolysis efficiency (performance). Such a water electrolysis system 100 according to the present embodiment can minimize decrease in the electrolysis efficiency (performance) of each water electrolysis stack 23 provided in the system, and thus can reduce the frequency of replacement of water electrolysis stacks 23 and improve the hydrogen production efficiency.

(12) As shown in steps S155c to S170 in FIG. 8B, in the water electrolysis system 100 according to the present embodiment, the system control unit 80 may be configured to operate to generate a hydrogen gas and an oxygen gas from water while lowering the excess reaction voltage of a water electrolysis stack 23 that has been subjected to electrolysis voltage recovery processes but failed to recover its electrolysis voltage by lowering the pressures of the generated gases to lower values than the initial pressures, increasing the flow rate of water supplied to the water electrolysis stack 23 to a higher value than the initial flow rate, and further lowering the temperature of the water electrolysis stack 23 to a lower value than the initial temperature.

Such a water electrolysis system 100 according to the present embodiment lowers the excess reaction voltage of a water electrolysis stack 23 that has been subjected to electrolysis voltage recovery processes but failed to recover its electrolysis voltage by lowering the pressures of the generated gases to lower values than the initial pressures, increasing the flow rate of water supplied to the water electrolysis stack 23 to a higher value than the initial flow rate, and further lowering the temperature of the water electrolysis stack 23 to a lower value than the initial temperature. Then, the water electrolysis system 100 according to the present embodiment operates to generate a hydrogen gas and an oxygen gas from water with the excess reaction voltage of the water electrolysis stack 23 lowered. Such a water electrolysis system 100 according to the present embodiment can improve the hydrogen production efficiency (that is, improve the electrolysis efficiency (performance)) with the same current value.

(13) As shown in FIG. 2, in the water electrolysis system 100 according to the present embodiment, the system control unit 80 may be configured to have a value setting unit 81b that sets the values of the pressure of the generated gases, the flow rates of water supplied to the water electrolysis stacks 23, and the temperatures of the water electrolysis stacks 23. As shown in FIGs. 3A and 3B, the value setting unit 81b may advantageously perform a process of lowering the electrolysis voltage of a water electrolysis stack 23 whose electrolysis voltage is detected to have exceeded any predetermined operating voltage range and risen to any predetermined warning voltage range to the operating voltage range by changing one parameter among the pressure of the generated gases, the flow rate of water supplied to the water electrolysis stack 23, and the temperature of the water electrolysis stack 23 or combined parameters to any operation values.

Such a water electrolysis system 100 according to the present embodiment can lower the electrolysis voltage of a water electrolysis stack 23 whose electrolysis voltage has risen due to stagnation of the gases in the electrode cells (not shown) incorporated in the water electrolysis stack 23 to the operating voltage range with the value setting unit 81b. Such a water electrolysis system 100 according to the present embodiment can improve the hydrogen production efficiency (that is, improve the electrolysis efficiency (performance)) with the same current value.

(14) As shown in FIG. 2, in the water electrolysis system 100 according to the present embodiment, the system control unit 80 may be configured to have a to-be-replaced stack judgment unit 81c that judges whether to replace a water electrolysis stack 23 that has been subjected to electrolysis voltage recovery processes but failed to recover its electrolysis voltage with another water electrolysis stack 23.

Such a water electrolysis system 100 according to the present embodiment can judge whether to replace a water electrolysis stack 23 that has been subjected to electrolysis voltage recovery processes but failed to recover its electrolysis voltage with another water electrolysis stack 23 with the to-be-replaced stack judgment unit 81c. Such a water electrolysis system 100 according to the present embodiment can reduce the frequency of replacement of water electrolysis stacks 23, and thus reduce the replacement cost for replacing water electrolysis stacks 23 and the disposal cost for disposing of water electrolysis stacks 23.

(15) As shown in step S180 in FIG. 5B, the method of operating the water electrolysis system 100 including multiple water electrolysis stacks 23 may advantageously be such that, when a water electrolysis stack 23 is present whose electrolysis voltage is detected to have risen and which has been subjected to electrolysis voltage recovery processes but failed to recover its electrolysis voltage, the user is notified of a warning that prompts replacement of the water electrolysis stack 23.

Such a water electrolysis system 100 according to the present embodiment can notify the user of the warning that prompts replacement of the water electrolysis stack 23 in a timely manner.

As described above, the water electrolysis system 100 according to the present embodiment can reduce the frequency of replacement of water electrolysis stacks 23 whose electrolysis efficiency (performance) has decreased, and improve the hydrogen production efficiency.

The present invention is not limited to the embodiment described above and includes various modifications. For example, the above embodiment have been described in detail in order to comprehensibly describe the present invention, and is not necessarily limited to an embodiment including all of the described configurations. Also, part of a configuration in the embodiment can be replaced with another configuration, and a configuration in the embodiment can additionally include another configuration as well. Also, part of each configuration can be subject to addition, removal, and replacement of another configuration.

**Reference Signs List**

| | |
|---|---|
| 11 | water tank |
| 12 | water delivery pump |
| 13 | water pipe |
| 14 | large cooler |
| 20 | water electrolysis unit |
| 21 | water flow rate adjustment valve |
| 22 | small cooler |
| 23, 23a, 23b, 23c, 23d | water electrolysis stack |
| 30 | hydrogen system |
| 31 | separation tank |
| 32 | pressure adjustment valve |
| 32a | pressure adjustment valve |
| 33 | water discharge valve |
| 40 | oxygen system |
| 41 | separation tank |
| 42 | pressure adjustment valve |
| 42a | pressure adjustment valve |
| 43 | water discharge valve |
| 51 | hydrogen gas tank |

| 51a | low-pressure hydrogen gas tank |
| 52 | oxygen gas tank |
| 52a | low-pressure oxygen gas tank |
| 61 | hydrogen gas pipe |
| 61a | low-pressure hydrogen gas pipe |
| 62 | oxygen gas pipe |
| 62a | low-pressure oxygen gas pipe |
| 70 | pressure raising pump |
| 71 | pressure adjustment valve |
| 72 | pressure adjustment valve |
| 80 | system control unit |
| 81 | arithmetic unit |
| 81a | operation control unit |
| 81b | value setting unit |
| 81c | to-be-replaced stack judgment unit |
| 82 | storage unit |
| 82a | reference information |
| 90 | data communication unit |
| 99 | storage medium |
| 100 | water electrolysis system |
| G1 | hydrogen gas |
| G2 | oxygen gas |
| Pr | control program |

**Claims**

1.  A water electrolysis system comprising:

    water electrolysis stacks each configured to generate a hydrogen gas and an oxygen gas as generated gases from water;
    a water tank configured to supply water to each of water electrolysis stacks;
    a hydrogen gas tank configured to store a hydrogen gas generated in each of water electrolysis stacks;
    an oxygen gas tank configured to store an oxygen gas generated in each of water electrolysis stacks; and
    a system control unit configured to control an operation of each unit of a system, and wherein
    the system control unit is configured to, during a hydrogen production operation, perform voltage monitoring on each of water electrolysis stacks and, for a water electrolysis stack of which an electrolysis voltage is detected to have risen by the voltage monitoring, perform a process of recovering the electrolysis voltage by temporarily changing an operating condition.

2.  The water electrolysis system according to claim 1, wherein the system control unit is configured to, for a water electrolysis stack of which the electrolysis voltage is detected to have risen, perform a process of lowering pressures of the generated gases and subsequently returning a pressure in the water electrolysis stack to an initial pressure as a process of recovering the electrolysis voltage.

3.  The water electrolysis system according to claim 2, wherein the system control unit is configured to, when lowering pressures of the generated gases and subsequently returning a pressure in the water electrolysis stack to an initial pressure, raise the pressure to a higher value than an initial pressure and subsequently return the pressure to an initial pressure or perform an operation to raise the pressure multiple times and subsequently return the pressure to an initial pressure.

4.  The water electrolysis system according to claim 2, wherein the system control unit is configured to, for a water electrolysis stack of which the electrolysis voltage has failed to recover despite execution of a process of recovering the electrolysis voltage, operate to generate the hydrogen gas and the oxygen gas from the water while lowering an excess reaction voltage by lowering pressures of the generated gases to lower values than initial pressures.

5.  The water electrolysis system according to claim 1, wherein the system control unit is configured to, for a water electrolysis stack of which the electrolysis voltage is detected to have risen, perform a process of increasing a flow rate of water supplied to the water electrolysis stack and subsequently returning the flow rate to an initial flow rate as a process of recovering the electrolysis voltage.

6. The water electrolysis system according to claim 5, wherein the system control unit is configured to, when increasing a flow rate of water supplied to the water electrolysis stack and subsequently returning the flow rate to an initial flow rate, lower the flow rate to a lower value than an initial flow rate and subsequently return the flow rate to an initial flow rate or perform an operation to lower the flow rate multiple times and subsequently return the flow rate to an initial flow rate.

7. The water electrolysis system according to claim 5, wherein the system control unit is configured to, for a water electrolysis stack of which the electrolysis voltage has failed to recover despite execution of a process of recovering the electrolysis voltage, operate to generate the hydrogen gas and the oxygen gas from the water while lowering an excess reaction voltage by increasing a flow rate of water supplied to the water electrolysis stack to a higher value than an initial flow rate.

8. The water electrolysis system according to claim 1, wherein the system control unit is configured to, for a water electrolysis stack of which the electrolysis voltage is detected to have risen, perform a process of changing pressures of the generated gases and a flow rate of water supplied to the water electrolysis stack and subsequently returning the pressures to initial pressures and the flow rate to an initial flow rate as a process of recovering the electrolysis voltage.

9. The water electrolysis system according to claim 1, wherein the system control unit is configured to, for a water electrolysis stack of which the electrolysis voltage is detected to have risen, perform a process of changing a flow rate of water supplied to the water electrolysis stack and changing a pressure of the hydrogen gas as a generated gas and/or a pressure of the oxygen gas as a generated gas and subsequently returning the flow rate to an initial flow rate and pressures of the generated gases to initial pressures as a process of recovering the electrolysis voltage.

10. The water electrolysis system according to claim 9, wherein the system control unit is configured to, for a water electrolysis stack of which the electrolysis voltage has failed to recover despite execution of a process of recovering the electrolysis voltage, operate to generate the hydrogen gas and the oxygen gas from the water while lowering an excess reaction voltage by lowering pressures of the generated gases to lower values than initial pressures and increasing a flow rate of water supplied to the water electrolysis stack to a higher value than an initial flow rate.

11. The water electrolysis system according to claim 1, wherein the system control unit is configured to, for a water electrolysis stack of which the electrolysis voltage is detected to have risen, perform a process of changing pressures of the generated gases, a flow rate of water supplied to the water electrolysis stack, and a temperature of the water electrolysis stack, and subsequently returning the pressures to initial pressures, the flow rate to an initial flow rate, and the temperature to an initial temperature as a process of recovering the electrolysis voltage.

12. The water electrolysis system according to claim 11, wherein the system control unit is configured to, for a water electrolysis stack of which the electrolysis voltage has failed to recover despite execution of a process of recovering the electrolysis voltage, operate to generate the hydrogen gas and the oxygen gas from the water while lowering an excess reaction voltage by lowering pressures of the generated gases to lower values than initial pressures, increasing a flow rate of water supplied to the water electrolysis stack to a higher value than an initial flow rate, and lowering a temperature of the water electrolysis stack to a lower value than an initial temperature.

13. The water electrolysis system according to claim 1, wherein the system control unit comprises a value setting unit configured to set values of a pressure of the generated gases, a flow rate of water supplied to the water electrolysis stack, and a temperature of the water electrolysis stack, and
the value setting unit is configured to, for a water electrolysis stack of which the electrolysis voltage is detected to have exceeded any predetermined operating voltage range and risen to any predetermined warning voltage range, perform a process of lowering the electrolysis voltage to the operating voltage range by changing one parameter among a pressure of the generated gases, a flow rate of water supplied to the water electrolysis stack, and a temperature of the water electrolysis stack to any operation value or changing combined parameters among the pressure, the flow rate, and the temperature to any operation values.

14. The water electrolysis system according to claim 1, wherein the system control unit comprises a to-be-replaced stack judgment unit which is configured to judge whether to replace a water electrolysis stack of which the electrolysis voltage has failed to recover despite execution of a process of recovering the electrolysis voltage with another water electrolysis stack.

**15.** A method of operating a water electrolysis system comprising water electrolysis stacks, the method comprising notifying a user of a warning prompting replacement when, for a water electrolysis stack of which an electrolysis voltage is detected to have risen, a process of recovering the electrolysis voltage has been performed but a water electrolysis stack of which the electrolysis voltage has failed to recover is present.

[FIG. 1]

[FIG. 2]

SYSTEM CONTROL UNIT — 80

ARITHMETIC UNIT — 81

OPERATION CONTROL UNIT — 81a

VALUE SETTING UNIT — 81b

TO-BE-REPLACED STACK JUDGMENT UNIT — 81c

STORAGE UNIT — 82

CONTROL PROGRAM — Pr

REFERENCE INFORMATION — 82a

STORAGE MEDIUM — 99

CONTROL PROGRAM — Pr

REFERENCE INFORMATION — 82a

[FIG. 3A]

[FIG. 3B]

[FIG. 4]

WATER ELECTROLYSIS STACK 23c
(BEFORE PRESSURE ADJUSTMENT)

WATER ELECTROLYSIS STACK 23c
(AFTER PRESSURE ADJUSTMENT)

WATER ELECTROLYSIS STACKS
23a, 23b, 23d

[FIG. 5A]

START

~S185
SET BACK TO ORIGINAL STATES

~S105
OPERATE IN DEFAULT STATE

~S110
DETECT PRESENCE OF WATER ELECTROLYSIS STACK WITH ELECTROLYSIS VOLTAGE HAVING RISEN TO WARNING VOLTAGE RANGE

~S115
SET TARGET VOLTAGE FOR LOWERING ELECTROLYSIS VOLTAGE OF TARGET STACK TO WITHIN OPERATING VOLTAGE RANGE

~S120
DETERMINE VALUES CALCULATED FROM OPERATING PRESESURE CHARACTERISTICS OF STACK VOLTAGE AS TARGET PRESSURES OF GENERATED GASES IN TARGET STACK

~S125
OPERATE WITH PRESSURES OF GENERATED GASES IN TARGET STACK LOWERED TO TARGET PRESSURES

~S130
IS TARGET STACK OPERATING WITHIN OPERATING VOLTAGE RANGE?
Yes
No

~S135
OPERATE WITH PRESSURES OF GENERATED GASES IN TARGET STACK CHANGED TO HIGHER VALUES THAN INITIAL PRESSURES (MULTIPLE CHANGES POSSIBLE)

~S140
IS TARGET STACK OPERATING WITHIN OPERATING VOLTAGE RANGE?
Yes
No

B11

A11

27

[FIG. 5B]

B11    A11

JUDGE THAT TARGET STACK MAY HAVE DETERIORATED    ～S145

DETERMINE VALUES CALCULATED FROM OPERATING PRESESURE CHARACTERISTICS OF STACK VOLTAGE AS TARGET PRESSURES OF GENERATED GASES IN TARGET STACK    ～S150

OPERATE WITH PRESSURES OF GENERATED GASES IN TARGET STACK LOWERED TO TARGET PRESSURES    ～S155

IS TARGET STACK OPERATING WITHIN OPERATING VOLTAGE RANGE?    ～S160
Yes
No

HAS VOLTAGE OF TARGET STACK REACHED ELECTRODE CELL DETERIORATION VOLTAGE?    ～S165
No
Yes

OPERATE WITH CURRENT APPLIED TO ALL SERIES STACKS LOWERED    ～S170

DOES STACK NEED TO BE REPLACED?    ～S175
No
Yes

INSTRUCT TO REPLACE STACK    ～S180

END

[FIG. 6A]

```
                              ( START )
                                  │
  ┌─────────────┐                 │
  │  SET BACK   │ ~S185           ▼                        ~S105
  │ TO ORIGINAL │◄──────┐  ┌──────────────────────────────────────┐
  │   STATES    │       │  │        OPERATE IN DEFAULT STATE       │
  └─────────────┘       │  └──────────────────────────────────────┘
         ▲              │                 │                    ~S110
         │              │  ┌──────────────────────────────────────┐
         │              │  │  DETECT PRESENCE OF WATER ELECTROLYSIS│
         │              │  │  STACK WITH ELECTROLYSIS VOLTAGE      │
         │              │  │  HAVING RISEN TO WARNING VOLTAGE RANGE│
         │              │  └──────────────────────────────────────┘
         │              │                 │                    ~S115
         │              │  ┌──────────────────────────────────────┐
         │              │  │  SET TARGET VOLTAGE FOR LOWERING      │
         │              │  │  ELECTROLYSIS VOLTAGE OF TARGET STACK │
         │              │  │  TO WITHIN OPERATING VOLTAGE RANGE    │
         │              │  └──────────────────────────────────────┘
         │              │                 │                    ~S120a
         │              │  ┌──────────────────────────────────────┐
         │              │  │  DETERMINE TARGET FLOW RATE OF WATER  │
         │              │  │  SUPPLIED TO TARGET STACK FROM        │
         │              │  │  REFERENCE INFORMATION                │
         │              │  └──────────────────────────────────────┘
         │              │                 │                    ~S125a
         │              │  ┌──────────────────────────────────────┐
         │              │  │  OPERATE WITH FLOW RATE OF WATER      │
         │              │  │  SUPPLIED TO TARGET STACK INCREASED   │
         │              │  │  TO TARGET FLOW RATE                  │
         │              │  └──────────────────────────────────────┘
         │              │                 │
         │         Yes  │           ◇─────────────────◇         ~S130
         │        ◄──────  IS TARGET STACK OPERATING
         │                  WITHIN OPERATING VOLTAGE RANGE?
         │                         ◇─────────────────◇
         │                             │ No          ~S135a
         │                  ┌──────────────────────────────────────┐
         │                  │  OPERATE WITH FLOW RATE OF WATER      │
         │                  │  SUPPLIED TO TARGET STACK CHANGED     │
         │                  │  TO LOWER VALUE THAN INITIAL FLOW RATE│
         │                  │  (MULTIPLE CHANGES POSSIBLE)          │
         │                  └──────────────────────────────────────┘
         │                             │
         │         Yes           ◇─────────────────◇         ~S140
         │        ◄──────  IS TARGET STACK OPERATING
         │                  WITHIN OPERATING VOLTAGE RANGE?
         │                         ◇─────────────────◇
         │                             │ No
      ┌─────┐                       ┌─────┐
      │ B12 │                       │ A12 │
      └─────┘                       └─────┘
```

[FIG. 6B]

B12

A12

~S145
JUDGE THAT TARGET STACK MAY HAVE DETERIORATED

~S150a
DETERMINE TARGET FLOW RATE OF WATER SUPPLIED
TO TARGET STACK FROM REFERENCE INFORMATION

~S155a
OPERATE WITH FLOW RATE OF WATER SUPPLIED
TO TARGET STACK INCREASED TO TARGET FLOW RATE

~S160
IS TARGET STACK OPERATING
WITHIN OPERATING VOLTAGE RANGE?

Yes

No

~S165
HAS VOLTAGE OF
TARGET STACK REACHED ELECTRODE CELL
DETERIORATION VOLTAGE?

No

Yes

~S170
OPERATE WITH CURRENT APPLIED
TO ALL SERIES STACKS LOWERED

~S175
DOES STACK NEED TO BE REPLACED?

No

Yes

~S180
INSTRUCT TO REPLACE STACK

END

30

[FIG. 7A]

```
                              ┌─────────┐
                              │  START  │
                              └─────────┘
                                   │
       ┌──────────────────────────┘
       │                           │
 ~S185 │                           │                              ~S105
┌──────────────┐      ┌────────────────────────────────────────────────┐
│  SET BACK    │      │            OPERATE IN DEFAULT STATE             │
│ TO ORIGINAL  │      └────────────────────────────────────────────────┘
│   STATES     │                           │
└──────────────┘                           │                              ~S110
       │              ┌────────────────────────────────────────────────┐
       │              │  DETECT PRESENCE OF WATER ELECTROLYSIS STACK    │
       │              │  WITH ELECTROLYSIS VOLTAGE HAVING RISEN TO      │
       │              │         WARNING VOLTAGE RANGE                   │
       │              └────────────────────────────────────────────────┘
       │                           │                              ~S115
       │              ┌────────────────────────────────────────────────┐
       │              │  SET TARGET VOLTAGE FOR LOWERING ELECTROLYSIS   │
       │              │      VOLTAGE OF TARGET STACK TO WITHIN          │
       │              │          OPERATING VOLTAGE RANGE               │
       │              └────────────────────────────────────────────────┘
       │                           │                              ~S120b
       │              ┌────────────────────────────────────────────────┐
       │              │  DETERMINE TARGET PRESSURES OF GENERATED GASES  │
       │              │  IN TARGET STACK AND TARGET FLOW RATE OF WATER  │
       │              │          SUPPLIED TO TARGET STACK              │
       │              └────────────────────────────────────────────────┘
       │                           │                              ~S125b
       │              ┌────────────────────────────────────────────────┐
       │              │  OPERATE WITH PRESSURES OF GENERATED GASES      │
       │              │ IN TARGET STACK LOWERED TO TARGET PRESSURES AND │
       │              │     WITH FLOW RATE OF WATER SUPPLIED TO         │
       │              │  TARGET STACK INCREASED TO TARGET FLOW RATE     │
       │              └────────────────────────────────────────────────┘
       │                           │
       │                           ▼                              ~S130
       │    Yes      ◇────────────────────────────────────◇
       ◄─────────────    IS TARGET STACK OPERATING
                     WITHIN OPERATING VOLTAGE RANGE?
                      ◇────────────────────────────────────◇
                                   │ No
                                   ▼                              ~S135b
                     ┌────────────────────────────────────────────────┐
                     │    OPERATE WITH PRESSURES OF GENERATED GASES    │
                     │            IN TARGET STACK CHANGED             │
                     │    TO HIGHER VALUES THAN INITIAL PRESSURES AND │
                     │ WITH FLOW RATE OF WATER SUPPLIED TO TARGET STACK│
                     │ CHANGED TO LOWER VALUE THAN INITIAL FLOW RATE  │
                     │          (MULTIPLE CHANGES POSSIBLE)           │
                     └────────────────────────────────────────────────┘
                                   │
                                   ▼                              ~S140
            Yes      ◇────────────────────────────────────◇
       ◄─────────────    IS TARGET STACK OPERATING
                     WITHIN OPERATING VOLTAGE RANGE?
                      ◇────────────────────────────────────◇
                                   │ No
    ┌─────┐                     ┌─────┐
    │ B13 │                     │ A13 │
    └─────┘                     └─────┘
```

[FIG. 7B]

B13

A13

~S145

JUDGE THAT TARGET STACK MAY HAVE DETERIORATED

~S150b

DETERMINE TARGET PRESSURES OF GENERATED GASES
IN TARGET STACK AND TARGET FLOW RATE OF WATER
SUPPLIED TO TARGET STACK

~S155b

OPERATE WITH PRESSURES OF GENERATED GASES
IN TARGET STACK LOWERED TO TARGET PRESSURES
AND WITH FLOW RATE OF WATER SUPPLIED
TO TARGET STACK INCREASED TO TARGET FLOW RATE

~S160

Yes ← IS TARGET STACK OPERATING
WITHIN OPERATING VOLTAGE RANGE?

No

~S165

No ← HAS VOLTAGE OF
TARGET STACK REACHED ELECTRODE CELL
DETERIORATION VOLTAGE?

Yes

~S170

OPERATE WITH CURRENT APPLIED
TO ALL SERIES STACKS LOWERED

~S175

No ← DOES STACK NEED TO BE REPLACED?

Yes

~S180

INSTRUCT TO REPLACE STACK

END

[FIG. 8A]

START

~S185
SET BACK TO ORIGINAL STATES

~S105
OPERATE IN DEFAULT STATE

~S110
DETECT PRESENCE OF WATER ELECTROLYSIS STACK WITH ELECTROLYSIS VOLTAGE HAVING RISEN TO WARNING VOLTAGE RANGE

~S115
SET TARGET VOLTAGE FOR LOWERING ELECTROLYSIS VOLTAGE OF TARGET STACK TO WITHIN OPERATING VOLTAGE RANGE

~S120c
DETERMINE TARGET PRESSURES OF GENERATED GASES IN TARGET STACK, TARGET FLOW RATE OF WATER SUPPLIED TO TARGET STACK, AND TARGET TEMPERATURE OF TARGET STACK

~S125c
OPERATE WITH PRESSURES OF GENERATED GASES IN TARGET STACK LOWERED TO TARGET PRESSURES, WITH FLOW RATE OF WATER SUPPLIED TO TARGET STACK INCREASED TO TARGET FLOW RATE, AND WITH STACK TEMPERATURE LOWERED TO TARGET TEMPERATURE

~S130
IS TARGET STACK OPERATING WITHIN OPERATING VOLTAGE RANGE?
Yes
No

~S135c
OPERATE WITH PRESSURES OF GENERATED GASES IN TARGET STACK CHANGED TO HIGHER VALUES THAN INITIAL PRESSURES, WITH FLOW RATE OF WATER SUPPLIED TO TARGET STACK CHANGED TO LOWER VALUE THAN INITIAL FLOW RATE, AND WITH STACK TEMPERATURE CHANGED TO HIGHER VALUE THAN INITIAL TEMPERATURE (MULTIPLE CHANGES POSSIBLE)

~S140
IS TARGET STACK OPERATING WITHIN OPERATING VOLTAGE RANGE?
Yes
No

B14

A14

33

[FIG. 8B]

B14

A14

~S145
JUDGE THAT TARGET STACK MAY HAVE DETERIORATED

~S150c
DETERMINE TARGET PRESSURES OF GENERATED GASES
IN TARGET STACK, TARGET FLOW RATE OF WATER SUPPLIED
TO TARGET STACK, AND TARGET TEMPERATURE
OF TARGET STACK

~S155c
OPERATE WITH PRESSURES OF GENERATED GASES
IN TARGET STACK LOWERED TO TARGET PRESSURES,
WITH FLOW RATE OF WATER SUPPLIED TO TARGET
STACK INCREASED TO TARGET FLOW RATE, AND WITH
STACK TEMPERATURE LOWERED TO TARGET TEMPERATURE

~S160
Yes ◄── IS TARGET STACK OPERATING
WITHIN OPERATING VOLTAGE RANGE?

No

~S165
No ◄── HAS VOLTAGE OF
TARGET STACK REACHED ELECTRODE CELL
DETERIORATION VOLTAGE?

Yes

~S170
OPERATE WITH CURRENT APPLIED
TO ALL SERIES STACKS LOWERED

~S175
No ◄── DOES STACK NEED TO BE REPLACED?

Yes

~S180
INSTRUCT TO REPLACE STACK

END

## INTERNATIONAL SEARCH REPORT

| International application No. |
| --- |
| **PCT/JP2024/017880** |

| A. | CLASSIFICATION OF SUBJECT MATTER |
| --- | --- |

*C25B 15/00*(2006.01)i; *C25B 1/04*(2021.01)i; *C25B 9/00*(2021.01)i; *C25B 15/02*(2021.01)i; *C25B 15/023*(2021.01)i
FI:   C25B15/00 302A; C25B1/04; C25B9/00 A; C25B15/02; C25B15/023

According to International Patent Classification (IPC) or to both national classification and IPC

| B. | FIELDS SEARCHED |
| --- | --- |

Minimum documentation searched (classification system followed by classification symbols)

C25B1/00-15/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023/012945 A1 (HITACHI, LTD.) 09 February 2023 (2023-02-09) claims, paragraphs [0019]-[0037], drawings | 1, 13-15 |
| A | | 2-12 |
| X | WO 2018/033948 A1 (KABUSHIKI KAISHA TOSHIBA) 22 February 2018 (2018-02-22) claims, paragraphs [0028], [0035]-[0039], fig. 7 | 1,13 |
| A | | 2-12, 14-15 |
| A | WO 2023/012944 A1 (HITACHI, LTD.) 09 February 2023 (2023-02-09) claims, paragraphs [0023]-[0036], drawings | 1-15 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 August 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/017880**

| Patent document cited in search report | | | Publication date (day/month/year) | Patent family member(s) | Publication date (day/month/year) |
|---|---|---|---|---|---|
| WO | 2023/012945 | A1 | 09 February 2023 | (Family: none) | |
| WO | 2018/033948 | A1 | 22 February 2018 | (Family: none) | |
| WO | 2023/012944 | A1 | 09 February 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023012945 A